# EUROPEAN PATENT APPLICATION

(11) **EP 4 335 912 A1**
(43) Date of publication of application: **13.03.2024**
(21) Application number: 23196975.9
(22) Date of filing: 12.09.2023
(51) Int. Cl.: C09K 5/04

(54) **LOWER GWP REFRIGERANT COMPOSITIONS**

(30) Priority: 12.09.2022 US 202217942661
(71) Applicant: Trane International Inc., Davidson, NC 28036 (US)
(72) Inventor: PETERSEN, Michael, Apple Valley, Minnesota, 55124 (US); KUJAK, Stephen A, Brownsville, Minnesota, 55919 (US); SCHULTZ, Kenneth J, Onalaska, Wisconsin, 54650 (US)
(74) Representative: Haseltine Lake Kempner LLP

(57) **Abstract**

A refrigerant composition includes R1225ye(E) refrigerant, a second refrigerant that is one of R1234ze(E) refrigerant and R32 refrigerant, and a third refrigerant that is one of R227ea refrigerant, R125 refrigerant, and R1234yf refrigerant. The refrigerant composition has a GWP of at or less than about 2000. A method of making a refrigerant composition includes mixing at least an amount of R1225ye(E) refrigerant, an amount of a second refrigerant, and an amount of a third refrigerant to obtain a refrigerant composition that has a GWP of at or about or less than 2000. A method of retrofitting a refrigerant composition in an HVACR system includes adding an amount of at least one refrigerant to a refrigerant composition to produce a retrofit refrigerant composition that includes R1225ye(E) refrigerant, a second refrigerant, and a third refrigerant.

## Description

### FIELD

The disclosure herein relates to refrigerant compositions, which can be used in, for example, refrigeration, air conditioning, and/or heat pump systems, which, for example, can be incorporated into a heating, ventilation, air conditioning, and refrigeration (HVACR) system or unit.

### BACKGROUND

Concern about environmental impact (e.g., ozone depletion) and the approval of the Montreal Protocol have resulted in a movement to replace ozone depleting refrigerants such as chlorofluorocarbons (CFCs) and hydrochlorofluorocarbons (HCFCs). Refrigerants, such as hydrofluorocarbons (HFCs) refrigerants and hydrofluoroolefins (HFOs) refrigerants have been utilized as replacements for previous refrigerants containing CFCs and HFCs. However, there has been recent movement (e.g., the Kigali Amendment to the Montreal Protocol, the Paris Agreement, United States' Significant New Alternatives Policy ("SNAP")) to phase out refrigerants that have a high global warming potential (GWP) such as some HFCs.

### BRIEF SUMMARY

In an embodiment, a refrigerant composition for an HVACR system includes R1225ye(E) refrigerant, a second refrigerant, and a third refrigerant. The second refrigerant is one of R1234ze(E) refrigerant and R32 refrigerant. The third refrigerant is one of R227ea refrigerant, R125 refrigerant, and R1234yf refrigerant. The refrigerant composition has a GWP of at or about 2000 or less than 2000. The second refrigerant is the R1234ze(E) refrigerant and the third refrigerant is the R227ea refrigerant, the second refrigerant is the R32 refrigerant and the third refrigerant is the R125, or the second refrigerant is the R32 refrigerant and the third refrigerant is the R1234yf.

In an embodiment, the second refrigerant is the R1234ze(E) refrigerant and the third refrigerant is the R227ea refrigerant, and the refrigerant composition has a capacity that is at or about 85% or greater than 85% of a capacity of R515B; the second refrigerant is the R32 refrigerant and the third refrigerant is the R125 refrigerant, and the refrigerant composition has a capacity that is at or about 80% or greater than 80% of a capacity of R410A; or the second refrigerant is the R32 refrigerant and the third refrigerant is the R1234yf refrigerant, and the refrigerant composition has a capacity that is at or about 80% or greater than 80% of a capacity of R407C.

In an embodiment, the second refrigerant is the R1234ze(E) refrigerant and the third refrigerant is the R227ea refrigerant. The R227ea refrigerant is at or about 41 wt%, or less than 41 wt% and greater than 0 wt% of the refrigerant composition. The refrigerant composition has a capacity that is at or about 85% or greater than 85% of a capacity of R515B, and the GWP of the refrigerant composition is less than 1500.

In an embodiment, the GWP of the refrigerant composition is at or about 150 or less than 150.

In an embodiment, the second refrigerant is the R32 refrigerant and the third refrigerant is the R125 refrigerant. The refrigerant composition has a capacity that is at or about 80% or greater than 80% of a capacity of R410A.

In an embodiment, the R1225ye refrigerant is at or about 42 wt%, or less than 42 wt% and greater than 0% of the refrigerant composition. The R32 refrigerant is at or about 24 wt%, or greater than 24 wt% and less than 100 wt% of the refrigerant composition. The R125 refrigerant is at or about 58 wt%, or less than 58 wt% and greater than 0 wt% of the refrigerant composition.

In an embodiment, the GWP of the refrigerant composition is at or about 1000 or less than 1000.

In an embodiment, the second refrigerant is the R32 refrigerant and the third refrigerant is the R1234yf refrigerant. The refrigerant composition has a capacity that is at or about 80% or greater than 80% of a capacity of R407C.

In an embodiment, the R1225ye refrigerant is at or about 73 wt%, or less than 73 wt% and greater than 0% of the refrigerant composition. The R32 refrigerant is at or about 14 wt%, or greater than 14 wt% and less than 100 wt% of the refrigerant composition. The R1234yf refrigerant is at or about 86 wt%, or less than 86 wt% and greater than 0 wt% of the refrigerant composition.

In an embodiment, the GWP of the refrigerant composition is at or about 300 or less than 300.

In an embodiment, a method is directed to making a refrigerant composition for a HVACR system. The method includes mixing at least an amount of R1225ye(E) refrigerant, an amount of a second refrigerant, and an amount of a third refrigerant to obtain a refrigerant composition. The second refrigerant is one of R1234ze(E) refrigerant and R32 refrigerant. The third refrigerant is one of R227ea refrigerant, R125 refrigerant, and R1234yf refrigerant. The refrigerant composition has a GWP of at or about 2000 or less than 2000. The second refrigerant is the R1234ze(E) refrigerant and the third refrigerant is the R227ea refrigerant, the second refrigerant is the R32 refrigerant and the third refrigerant is the R125, or the second refrigerant is the R32 refrigerant and the third refrigerant is the R1234yf.

In an embodiment, the second refrigerant is the R1234ze(E) refrigerant and the third refrigerant is the R227ea refrigerant, and the refrigerant composition has a capacity that is at or about 85% or greater than 85% of a capacity of R515B; the second refrigerant is the R32 refrigerant and the third refrigerant is the R125 refrigerant, and the refrigerant composition has a capacity that is at or about 80% or greater than 80% of a capacity of R410A; or the second refrigerant is the R32 refrigerant and the third refrigerant is the R1234yf refrigerant, and the refrigerant composition has a capacity that is at or about 80% or greater than 80% of a capacity of R407C.

In an embodiment, the second refrigerant is the R1234ze(E) refrigerant and the third refrigerant is the R227ea refrigerant. The R227ea refrigerant is at or about 41 wt%, or less than 41 wt% and greater than 0 wt% of the refrigerant composition. The refrigerant composition has a capacity that is at or about 85% or greater than 85% of a capacity of R515B. The GWP of the refrigerant composition is less than 1500.

In an embodiment, the second refrigerant is the R32 refrigerant and the third refrigerant is the R125 refrigerant. The refrigerant composition has a capacity that is at or about 80% or greater than 80% of a capacity of R410A.

In an embodiment, the second refrigerant is the R32 refrigerant and the third refrigerant is the R1234yf refrigerant. The R1225ye refrigerant is at or about 73 wt%, or less than 73 wt% and greater than 0% of the refrigerant composition. The R32 refrigerant is at or about 14 wt%, or greater than 14 wt% and less than 100 wt% of the refrigerant composition. The R1234yf refrigerant is at or about 86 wt%, or less than 86 wt% and greater than 0 wt% of the refrigerant composition. The refrigerant composition has a capacity that is at or about 80% or greater than 80% of a capacity of R407C.

In an embodiment, a method is directed to retrofitting a refrigerant composition in an HVACR system. The method includes adding an amount of at least one refrigerant to a refrigerant composition to produce a retrofit refrigerant composition. The retrofit refrigerant composition includes R1225ye(E) refrigerant, a second refrigerant, and a third refrigerant. The second refrigerant is one of R1234ze(E) refrigerant and R32 refrigerant. The third refrigerant is one of R227ea refrigerant, R125 refrigerant, and R1234yf refrigerant. The second refrigerant is the R1234ze(E) refrigerant and the third refrigerant is the R227ea refrigerant, the second refrigerant is the R32 refrigerant and the third refrigerant is the R125, or the second refrigerant is the R32 refrigerant and the third refrigerant is the R1234yf. The retrofit refrigerant composition has a GWP that is at or about 2000 or less than 2000.

In an embodiment, the second refrigerant is the R1234ze(E) refrigerant and the third refrigerant is the R227ea refrigerant, and the refrigerant composition has a capacity that is at or about 85% or greater than 85% of a capacity of R515B; the second refrigerant is the R32 refrigerant and the third refrigerant is the R125 refrigerant, and the refrigerant composition has a capacity that is at or about 80% or greater than 80% of a capacity of R410A; or the second refrigerant is the R32 refrigerant and the third refrigerant is the R1234yf refrigerant, and the refrigerant composition has a capacity that is at or about 80% or greater than 80% of a capacity of R407C.

In an embodiment, the second refrigerant is the R1234ze(E) refrigerant and the third refrigerant is the R227ea refrigerant. A capacity of the retrofit refrigerant composition is at or about 85% or greater than 85% of a capacity of R515B.

In an embodiment, the second refrigerant is the R32 refrigerant and the third refrigerant is the R125 refrigerant. The retrofit refrigerant composition has a capacity that is at or about 80% or greater than 80% of a capacity of R410A.

In an embodiment, the second refrigerant is the R32 refrigerant and the third refrigerant is the R1234yf refrigerant. The retrofit refrigerant composition has a capacity that is at or about 80% or greater than 80% of a capacity of R407C.

### BRIEF DESCRIPTION OF THE DRAWINGS

Figure 1 is a schematic diagram of an embodiment of a refrigerant circuit of a HVACR system.
Figure 2 shows an embodiment of a matrix of refrigerant compositions of R1225ye(E), R1234ze(E), and R227ea that includes plots of GWP, temperature glide, relative capacity, and relative coefficient of performance ("COP").
Figure 3 shows a matrix based on the matrix of Figure 2 that can be used to select refrigerant composition(s) with a desired set of properties, according to an embodiment.
Figure 4 an embodiment of a matrix of refrigerant compositions of R1225ye(E), R1234ze(E), and R227ea that includes plots of GWP and relative compressor discharge temperature.
Figure 5 shows an embodiment of a matrix of refrigerant compositions of R1225ye(E), R125, and R32 that includes plots of GWP, temperature glide, and relative capacity.
Figure 6 shows a matrix based on the matrix of Figure 5 that can be used to select refrigerant composition(s) with a desired set of properties, according to an embodiment.
Figure 7 shows an embodiment of a matrix of refrigerant compositions of R1225ye(E), R125, and R32 that includes plots of GWP and relative compressor discharge temperature.
Figure 8 shows an embodiment of a matrix of refrigerant compositions of R1225ye(E), R1234yf, and R32 that includes plots of GWP, temperature glide, capacity relative to R407C, and COP relative to R407C.
Figure 9 shows a matrix based on the matrix of Figure 8 that can be used to select refrigerant composition(s) with a desired set of properties, according to an embodiment.
Figure 10 shows an embodiment of a matrix of refrigerant compositions of R1225ye(E), R1234yf, and R32 that includes plots of GWP and relative compressor discharge temperature.

Like reference numbers represent like parts throughout.

### DETAILED DESCRIPTION

Compositions and methods are described for reducing flammability and/or GWP in a heating, ventilation, air conditioning and refrigeration ("HVACR") system, for example, by having a refrigerant composition that includes a blend of refrigerants. Refrigerant compositions and methods of use are described which can be used for retrofitting, servicing, controlling flammability, improving performance, lubricant solubility, and miscibility, and improving the safety of an HVACR system.

R32 refrigerant (i.e., difluoromethane) ("R32") has a GWP of 677 and is mildly flammable (burning velocity of about 6.7 cm/s; classification A2L under ASHRAE Standard 34). GWP as described herein is based on the values reported in the Fifth Assessment Report of the Intergovernmental Panel on Climate Change ("AR5"). Flammability and flammability classifications for refrigerant/refrigerant compositions (e.g., Class 1, Class 2, Class 2L, Class 3) as discussed herein for refrigerants and refrigerant compositions are determined according to ASHRAE Standard 34 (e.g., ASHRAE Standard 34-2019).

R1225ye(E) refrigerant (i.e., (E)-1,2,3,3,3-Pentafluoropropene) ("R1225ye(E)") has a GWP of less than 1 and is considered non-flammable (not yet classified under ASHRAE Standard 34; non-flammable fluids are classified as Class 1 under ASHRAE Standard 34).

R1234ze(E) refrigerant (i.e., 1,3,3,3-tetrafluoropropene) ("R1234ze(E)") has a GWP of 1 and is mildly flammable (classification of A2L under ASHRAE Standard 34).

R227ea refrigerant (i.e., 1,1,1,2,3,3,3-heptafluoropropane) ("R227ea") has a GWP of 3220 and is non-flammable (classification of A1 under ASHRAE Standard 34).

R125 refrigerant (i.e., pentafluoroethane) ("R125") has a GWP of 3,170 and is nonflammable (classification A1 under ASHRAE Standard 34). For example, R125 has a capacity that is approximately 71% of the capacity of R32 and approximately 76% of the capacity of R410A, when utilized in normal air-conditioning operating condition (e.g., Tₑᵥₐₚ = 52.5°F with 15°F suction superheat and T_{cond} = 115°F with 15°F of exit liquid subcooling). For example, R125 has a thermodynamic efficiency that is approximately 96.6% of the thermodynamic efficiency of R32 and 97.5% of the thermodynamic efficiency R410A, when utilized in normal air-conditioning operating conditions.

R1234yf refrigerant (i.e., 2,3,3,3-tetrafluoropropene) ("R1234yf') has a GWP of less than 1 and is mildly flammable (burning velocity of about 1.5 cm/s; classified as A2L under ASHRAE Standard 34). R1234yf has a capacity that is much less than R32 or R410A. For example, R1234yf has a capacity that is approximately 40.3% of R32 and 43.4% of R410A, when utilized in normal air-conditioning operating conditions. For example, the thermodynamic efficiency of R1234yf is equal to 105.4% of R32 and 106.5% of R410A, when utilized in normal air-conditioning operating conditions.

R515B refrigerant ("R515B") is a mixture of R1234ze(E) and R227ea. R515B has a GWP of 299 and is non-flammable (classified as A1 under ASHRAE standard 34).

R410A refrigerant ("R410A") is a mixture of equal parts by weight of R32 and R125. R410A has a high GWP of 1924, and is nonflammable (classified as A1 under ASHRAE Standard 34).

R407C refrigerant ("R407C") is a mixture of R32, R125, and R134a ("1,1,1,2-tetrafluoroethane"). R407C has a high GWP of 1774 and is non-flammable (classified as A1 under ASHRAE Standard 34).

Embodiments disclosed are directed to refrigerant compositions, methods of retrofitting a refrigerant composition, and methods of making a refrigerant composition. In some embodiments, refrigerant compositions have a GWP that is about or less than 1500 and a capacity that is about or greater than 85% of the capacity of R515B. In some embodiments, the refrigerant compositions have a COP that is about 95% of the COP of R515B. In some embodiments, the GWP of the refrigerant compositions is about or less than 500. In some embodiments, the GWP of the refrigerant compositions is about or less than 200.

In some embodiments, refrigerant compositions have a capacity that is about or greater than 80% of the capacity of R410A and a GWP of about or less than 2000. In some embodiments, the refrigerant compositions have a capacity that is about or greater than 90% of the capacity of R410A. In some embodiments, the refrigerant compositions have a capacity that is about or greater than 95% of the capacity of R410A. In some embodiments, the GWP of the refrigerant compositions is about or less than 1500. In some embodiments, the GWP of the refrigerant compositions is about or less than 1000.

In some embodiments, the refrigerant compositions have a capacity that is at or about 80% or greater than 80% of the capacity of R407C and a GWP of about or less than 700. In some embodiments, the refrigerant compositions have a COP of about or greater than 95% of the COP of R407C. In some embodiments, the capacity of the refrigerant compositions is about or greater than 85% of the capacity of R407C. In some embodiments, the capacity of the refrigerant compositions is about or greater than 90% of the capacity of R407C. In some embodiments, the capacity of the refrigerant compositions is about or greater than 95% of the capacity of R407C. In some embodiments, the GWP of the refrigerant compositions is about or less than 600. In some embodiments, the GWP of the refrigerant compositions is about or less than 500. In some embodiments, the GWP of the refrigerant compositions is about or less than 300.

In an embodiment, a refrigerant composition with a specific set of performance properties may be desired. In some embodiments, the refrigerant composition may be utilized in an HVACR designed for R515B. In such embodiments, it would be desired for the refrigerant composition to perform similar to R515B so that the HVACR system does not have to be modified. In some embodiments, the refrigerant composition may be utilized in an HVACR designed for R410A. In such embodiments, it would be desired for the refrigerant composition to perform similar to R410A so that the HVACR system does not have to be modified. In some embodiments, the refrigerant composition may be utilized in an HVACR designed for R407C. In such embodiments, it would be desired for the refrigerant composition to perform similar to R407C so that the HVACR system does not have to be modified.

Performance of a refrigerant may be based on one or more properties of the refrigerant composition. For example, properties that affect performance include capacity, temperature glide, coefficient of performance (thermodynamic efficiency), and compressor discharge temperature. In an embodiment, a refrigerant composition having a specific capacity and one or more of the other performance properties may be desired. The performance properties may be relative to the performance properties of R515B, R1234z(E), R410A, or R407C. In some embodiments, one or more properties of a refrigerant composition may be simulated and/or estimated by an Excel-based vapor compression thermodynamic cycle tool utilizing NIST's REFPROP program to compute thermodynamic properties. With respect to an amount of refrigerant, "about" allows for up to 1% variation from the recited value to account for rounding.

An HVACR system can be used to cool or heat one or more conditioned spaces. A HVACR system may utilize a refrigerant in a circuit to cool or heat a process fluid (e.g., air, water, chiller liquid, or the like). For example, an HVACR system in some instances will cool or heat an area by performing work on a refrigerant that is in a heat exchange relationship with air. The cooled or heated air may then be ventilated to an area to cool or heat the area. For example, an HVACR systems in some instances will cool an area by preforming work on a refrigerant that is in a heat exchanger relationship with a chiller liquid (e.g., water, glycol and/or water mixture, or the like).

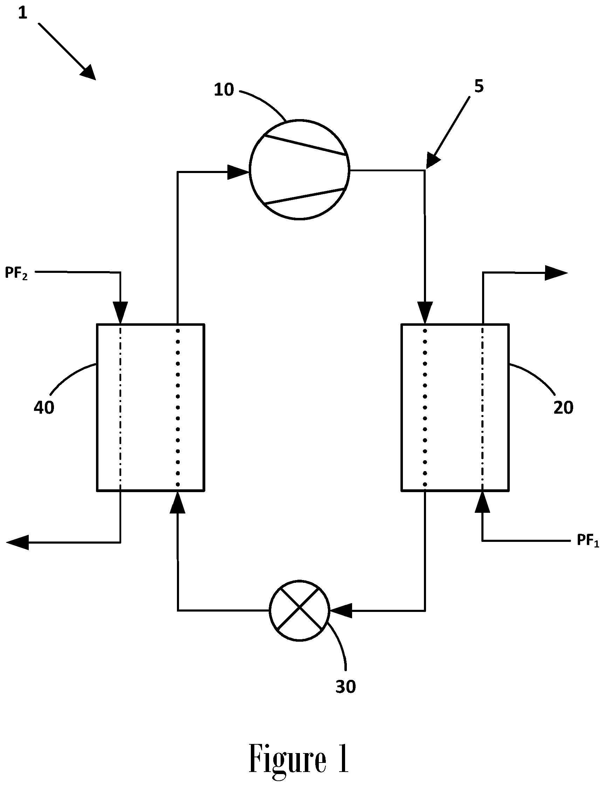

Figure 1 is a schematic diagram of an embodiment of a refrigeration circuit 5 in a heating, ventilation, air conditioning, and refrigeration (HVACR) system 1. In an embodiment, the HVACR system 1 may be an industrial or residential HVACR system 1 configured to condition the inside of a building (e.g., office space, residential house, or the like). In an embodiment, the HVACR system 1 may be a transport HVACR use for cooling the inside of a transport unit (e.g., shipping container, transport/trucking container, reefer, or the like) and/or a passenger vehicle (e.g., a bus, a plane, or the like).

The refrigeration circuit 5 includes a compressor 10, a condenser 20, an expansion device 30, and an evaporator 40. In an embodiment, the refrigeration circuit 5 can be modified to include additional components. For example, the refrigeration circuit 5 in an embodiment can include an economizer heat exchanger, one or more flow control devices, a receiver tank, a dryer, a suction-liquid heat exchanger, or the like. he components of the refrigerant circuit 5 are fluidly connected. Dotted lines and dotted dashed lines are provided in the Figures to indicate fluid flows through some components (e.g., compressor 10, condenser 20, evaporator 40) for clarity, and should be understood as not specifying a specific route within each component.

The refrigerant circuit 5 can be configured as a cooling system (e.g., a fluid chiller of an HVACR, an air conditioning system, or the like) that can be operated in a cooling mode, and/or the refrigerant circuit 5 can be configured to operate as a heat pump system that can run in a cooling mode and a heating mode.

The refrigeration circuit 5 applies known principles of gas compression and heat transfer. The refrigeration circuit can be configured to heat or cool a process fluid (e.g., water, air, chiller fluid, or the like). In an embodiment, the refrigeration circuit 5 may represent a chiller that cools a process fluid such as water or the like. In an embodiment, the refrigeration circuit 5 may represent an air conditioner and/or a heat pump that cools and/or heats a process fluid such as air, water, or the like.

During the operation of the refrigeration circuit 5, a working fluid (e.g., containing refrigerant, refrigerant mixture, or the like) flows into the compressor 10 from the evaporator 40 in a gaseous state at a relatively lower pressure. The compressor 10 compresses the gas into a high pressure state, which also heats the gas. After being compressed, the relatively higher pressure and higher temperature gas flows from the compressor 10 to the condenser 20. In addition to the working fluid flowing through the condenser 20, a first process fluid PF₁ (e.g., external air, external water, cooling/heater water, or the like) also separately flows through the condenser 20. The first process fluid absorbs heat from the working fluid as the first process fluid PF₁ flows through the condenser 20, which cools the working fluid as it flows through the condenser. The working fluid condenses to liquid and then flows into the expansion device 30. The expansion device 30 allows the working fluid to expand, which converts the working fluid to a mixed vapor and liquid state. An "expansion device" as described herein may also be referred to as an expander. In an embodiment, the expander may be an expansion valve, expansion plate, expansion vessel, orifice, or the like, or other such types of expansion mechanisms. It should be appreciated that the expander may be any type of expander used in the field for expanding a working fluid to cause the gaseous working fluid to decrease in pressure and temperature. The relatively lower temperature, vapor/liquid working fluid then flows into the evaporator 40. A second process fluid PF₂ (e.g., air, chiller liquid, water, or the like) also flows through the evaporator 40. The working fluid absorbs heat from the second process fluid PF₂ as it flows through the evaporator 40, which cools the second process fluid PF₂ as it flows through the evaporator 40. As the working fluid absorbs heat, the working fluid evaporates to vapor. The working fluid then returns to the compressor 10 from the evaporator 40. The above-described process continues while the refrigeration circuit 5 is operated, for example, in a cooling mode.

The refrigerant compositions and methods described herein may be used in the refrigerant circuit 5 of the HVACR system 1. For example, methods of retrofitting a refrigeration composition may be applied to the heat circuit 5 of Figure 1 and/or to retrofit the existing refrigerant composition in the working fluid of the HVACR system 1. Further, refrigeration compositions described herein may be used as/in a working fluid in the refrigerant circuit 5 of Figure 1. Additionally, methods for retrofitting a refrigerant composition described here may be carried out on the working fluid in the refrigerant circuit 5 of Figure 1 (e.g., carried out on the refrigerant composition in the working fluid).

Refrigerant compositions as discussed herein may be used as a refrigerant composition in the HVACR system (e.g., the working fluid in the refrigerant circuit 5). For example, the refrigerant composition is the portion of the working fluid that is configured to undergo phase changes, for example, between liquid and vapor, in one or more vapor-compression cycles in an HVACR system (e.g., within at least one vapor-compression cycle within the refrigerant circuit 5).

It is appreciated that the refrigerant compositions may consist of, consist essentially of, or comprise a blend of three refrigerants. In an embodiment, the three refrigerants are R1225ye(E), R1234ze(E), and R227ea. In an embodiment, the three refrigerants are R1225ye(E), R125, and R32. In an embodiment, the three refrigerants are R1225ye(E), R1234yf, and R32. The refrigerant blends are discussed in more detail below.

### Refrigerant Compositions including R1225ye(E), R1234ze(E), and R227ea

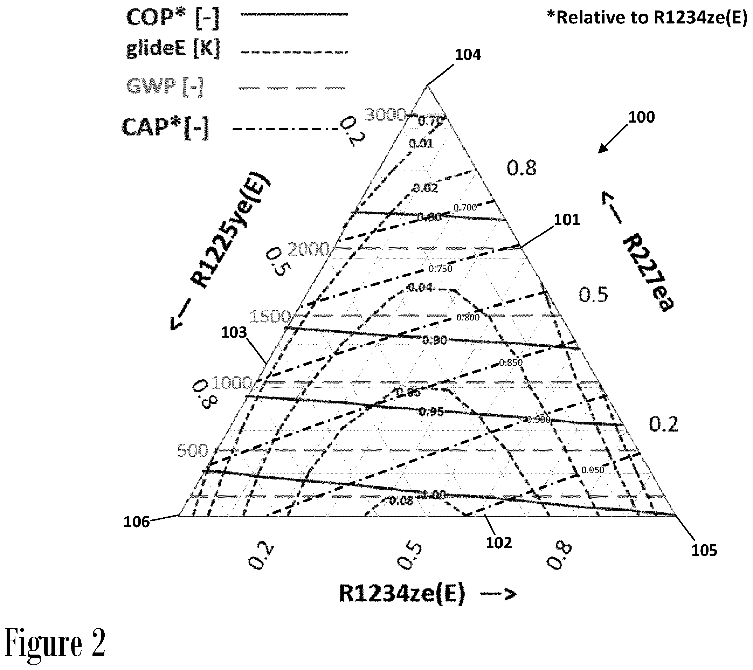

Figure 2 shows an embodiment of a matrix 100 of refrigerant compositions of R1225ye(E), R1234ze(E), and R227ea that was developed to show plots of GWP, temperature glide, capacity relative to R515B, coefficient of performance ("COP") relative to R515B as a function of the concentration of R1225ye(E), R1234ze(E), and R227ea. Each side 101, 102, 103 of the triangle corresponds to weight percentages of R227ea, R1234ze(E), and R1225ye(E), respectively. R515B and R1234ze(E) can have similar performance characteristics. The refrigerant compositions compared to and/or discussed for replacing R515B may be similarly compared and/or used for replacing 1234ze(E).

Each vertex 104, 105, 106 of the triangle corresponds to a composition of 100 wt% R227ea, 100 wt% R1234ze(E), and 100 wt% R1225ye(E), respectively. Properties (e.g., GWP, COP relative to R515B, capacity relative to R515B, temperature glide) of a refrigerant composition with a weight percent of R227ea, a weight percent of R1234ze(E), and a weight percent of R1225ye(E) can be determined using the matrix 100.

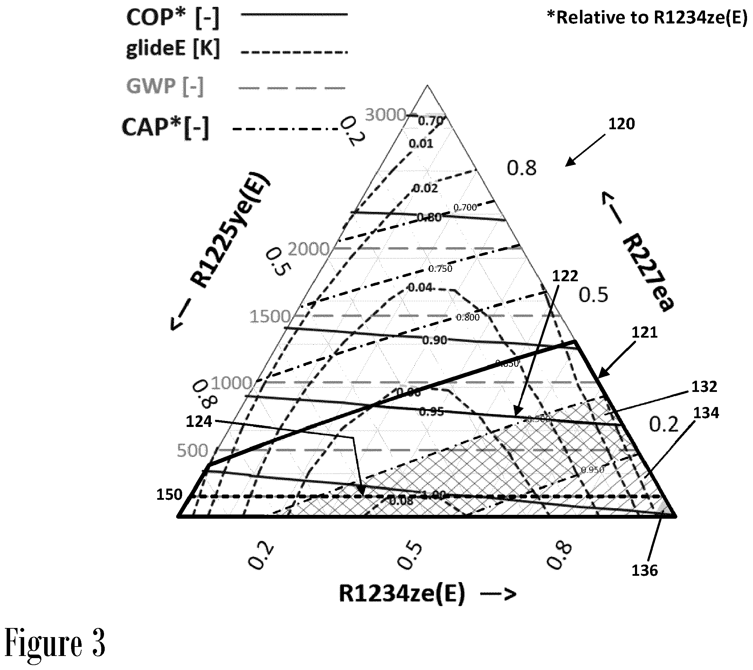

Figure 3 illustrates a matrix 120 based on matrix 100 of Figure 2 and that has the same sides and vertices as the matrix 100 of Figure 2. The matrix 120 is the same as the matrix 100 of Figure 2. Matrix 120 can be used in a method of making a refrigerant composition including R227ea, R1234ze(E), and R1225ye(E) and/or in a method of retrofitting a refrigerant composition so that the resulting refrigerant composition/retrofit refrigerant composition has one or more desired properties.

In an embodiment, a desired set of properties of a useful refrigerant composition includes a GWP of less than 1500, a capacity that is at or about 85% or greater than 85% of the capacity of R515B, and a COP that is at or about % or greater than 95% of the capacity of R515B.

Based on these desired properties, a range of useful refrigerant compositions 121 is shown in matrix 120 of Figure 3. The useful refrigerant compositions 121 include at or about 41 wt%, or less than 41 wt% and greater than 0 wt% of R227ea; greater than 0% and less than 100% of R1234ze(E); and greater than 0% and less than 100% of R1225ye(E). Further, the useful refrigerant compositions 121 are also non-flammable or mildly flammable (i.e., would be classified as Class 1 or Class 2L under ASHRAE Standard 34).

In an embodiment, the useful compositions 121 may include preferred compositions 122 as shown in Figure 3. The properties of the preferred compositions 122 include a capacity at or about 85% or greater than 85% of the capacity of R515B, a GWP of less than 1000, and a COP of at or about 90% or greater than 90% of the COP of R515B. The preferred compositions 122 include at or about 26 wt%, or less than 26 wt% and greater than 0 wt% of R227ea; greater than 0% and less than 100% of R1234ze(E); and greater than 0% and less than 100% of R1225ye(E).

In an embodiment, the useful compositions 121 may include further preferred compositions 124 as shown in Figure 3. The properties of the further preferred compositions 124 include a capacity of at or about 85% or greater than 85% of the capacity of R515B, a GWP of at or about 150 or less than 150, and a COP of at or about 95% or greater than 95% of the COP of R515B. The further preferred compositions 124 include at or about 5 wt%, or less than 5 wt% and greater than 0 wt% of R227ea; greater than 0% and less than 100% of R1234ze(E); and greater than 0% and less than 100% of R1225ye(E).

Figure 3 also includes a first hatched area 132 and a second hatched area 134. The compositions in the first hatched area 132 have a capacity that is from at or about 90% to at or about 95% of the capacity of R515B. In some embodiments, a set of desired properties may include the capacity provided by the compositions within the first hatched area 132. In such embodiments, desired compositions may be selected from the compositions shown in Figure 3 (e.g., useful compositions 121, preferred compositions 122, further preferred compositions 124) and described with respect to Figure 3 so as to be within the first hatched area 132.

For example, such desired compositions of the further preferred compositions 124 include at or about 5 wt%, or less than 5 wt% and greater than 0 wt% of R227ea; from at or about 18 wt% to at or about 66 wt% of R1234ze(E); and from at or about 30 wt% to at or about 82 wt% of R1225ye(E).

The compositions in the hatched areas 132, 134 have a capacity that is at or about 90% or greater than 90% of the capacity of R515B. In some embodiments, a set of desired properties may include the higher capacity provided by the compositions within the hatched areas 132, 134. In such embodiments, desired compositions may be selected from the compositions shown in Figure 3 (e.g., useful compositions 121, preferred compositions 122, further preferred compositions 124) and described with respect to Figure 3 so as to be within the first and second hatched areas 132, 134.

For example, such desired compositions of the useful compositions 121 include at or about 28 wt%, or less than 28 wt% and greater than 0 wt% of R227ea; at or about 18%, or greater than 18 wt% and less than 100 wt% of R1234ze(E); and at or about 82 wt%, or less than 82 wt% and greater than 0 wt% of R1225ye(E). These desired compositions of the useful compositions 121 also have a GWP of less than 1000.

For example, such desired compositions of the preferred compositions 122 include at or about 23 wt%, or less than 23 wt% and greater than 0 wt% of R227ea; at or about 18%, or greater than 18 wt% and less than 100 wt% of R1234ze(E); and at or about 82 wt%, or less than 82 wt% and greater than 0 wt% of R1225ye(E). These desired compositions of the preferred compositions 122 also have a GWP of less than 1000.

For example, such desired compositions of the further preferred compositions 124 include at or about 5 wt%, or less than 5 wt% and greater than 0 wt% of R227ea; at or about 17%, or greater than 17 wt% and less than 100 wt% of R1234ze(E); and at or about 83 wt%, or less than 83 wt% and greater than 0 wt% of R1225ye(E). In some embodiments, a set of desired properties may include having from at or about 85% to at or about 90% of the capacity of R515B. In such embodiments, desired compositions may be selected from the compositions shown in Figure 3 (e.g., useful compositions 121, preferred compositions 122, further preferred compositions 124) and described with respect to Figure 3 so to omit the compositions in the hatched areas 132, 134.

For example, such desired compositions of the further preferred compositions 124 include at or about 5 wt%, or less than 5 wt% and greater than 0 wt% of R227ea; at or about 26 wt%, or less than 26 wt% and greater than 0 wt% of R1234ze(E); and at or about 70 wt%, or greater than 70 wt% and less than 100 wt% of R1225ye(E).

The compositions in the second hatched area 134 have a capacity that is at or about 95% or greater than 95% of the capacity of R515B. In some embodiments, a set of desired properties may include the higher capacity provided by the compositions within the second hatched area 134. In such embodiments, desired compositions may be selected from the compositions shown in Figure 3 (e.g., useful compositions 121, preferred compositions 122, further preferred compositions 124) and described with respect to Figure 3 so as to be within the second hatched area 134.

For example, such desired compositions of the useful compositions 121 include at or about 15 wt%, or less than 15 wt% and greater than 0 wt% of R227ea; at or about 58%, or greater than 58 wt% and less than 100 wt% of R1234ze(E); and at or about 44 wt%, or less than 44 wt% and greater than 0 wt% of R1225ye(E). These desired compositions of the useful compositions 121 also have a GWP of less than 500.

For example, such desired compositions of the further preferred compositions 124 include at or about 5 wt%, or less than 5 wt% and greater than 0 wt% of R227ea; at or about 58%, or greater than 58 wt% and less than 100 wt% of R1234ze(E); and at or about 44 wt%, or less than 44 wt% and greater than 0 wt% of R1225ye(E).

Figure 3 also includes a shaded area 136. Compositions within the shaded area 136 are flammable (e.g., mildly flammable, would be classified as 2L under ASHRAE Standard 34). Compositions in the shaded area 136 include at or about 95.6 wt% or greater than 95.6 wt% of R1234ze(E). In some embodiments, a set of desired properties may include being non-flammable. In such embodiments, desired compositions may be selected from the compositions shown in Figure 3 (e.g., useful compositions 121, preferred compositions 122, further preferred compositions 124) and described with respect to Figure 3 so as to omit the compositions in the shaded area 136. For example, such desired non-flammable compositions are those compositions containing less than 95.6 wt% of R1234ze(E).

In some embodiments, a set of desired properties for a refrigerant composition may include a different GWP than discussed above. In an embodiment, a refrigerant composition having a GWP of at or about 1000 or less than 1000 may be desired. In an embodiment, a refrigerant composition having a GWP of at or about 500 or less than 500 may be desired. In an embodiment, a refrigerant composition having a GWP of at or about 300 or less than 300 may be desired.

In some embodiments, a set of desired properties for a refrigerant composition may include temperature glide. In an embodiment, a refrigerant composition having a temperature glide of at or about 0.08°K or less than 0.08°K may be desired. In an embodiment, a refrigerant composition having a temperature glide of at or about 0.06°K or less than 0.08°K may be desired. In an embodiment, a refrigerant composition having a temperature glide of at or about 0.08°K or less than 0.08°K may be desired. In an embodiment, a refrigerant composition having a temperature glide of at or about 0.08°K or less than 0.08°K may be desired.

In such embodiments, desired compositions may be selected from the compositions shown in Figure 3 (e.g., useful compositions 121, preferred compositions 122, further preferred compositions 124) and described with respect to Figure 3 so as to have the desired set of properties of GWP and/or temperature glide.

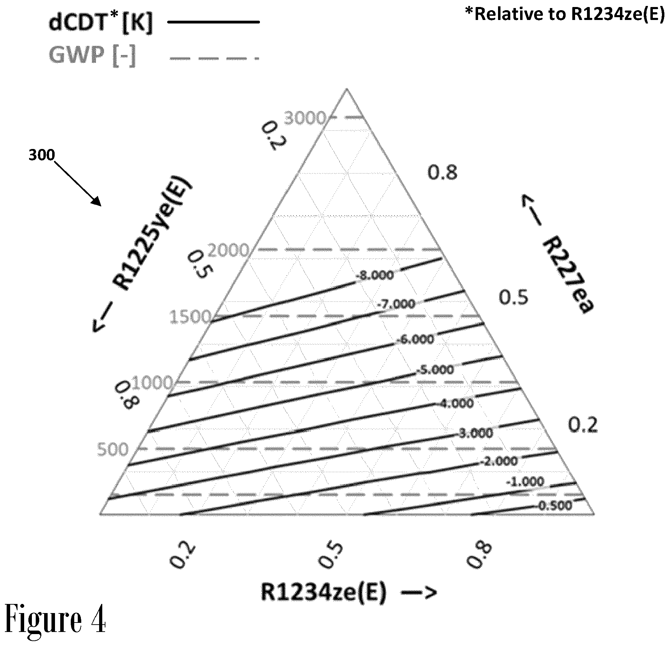

Figure 4 shows an embodiment of a matrix 200 of refrigerant compositions of R1225ye(E), R1234ze(E), and R227ea that was developed to show plots of GWP and compressor discharge temperature ("dCDT") relative to R515B as a function of the concentration of R1225ye(E), R1234ze(E), and R227ea. The matrix 200 has similar sides and vertices as the matrix 100 in Figure 3.

In some embodiments, a set of desired properties for a refrigerant composition may include compressor discharge temperature relative to R515B. In an embodiment, a refrigerant composition that provides a compressor discharge temperature of at or about -5°K or greater than -5°K relative to R515B may be desired. In an embodiment, a refrigerant composition that provides a compressor discharge temperature of at or about -4°K or greater than -4°K relative to R515B may be desired. In an embodiment, a refrigerant composition that provides a compressor discharge temperature of at or about -3°K or greater than -3°K relative to R515B may be desired. In an embodiment, a refrigerant composition that provides a compressor discharge temperature of at or about -2°K or greater than -2°K relative to R515B may be desired. In an embodiment, a refrigerant composition that provides a compressor discharge temperature of at or about -1°K or greater than -1°K relative to R515B may be desired.

In such embodiments, desired compositions may be selected from the compositions shown in Figure 3 (e.g., useful compositions 121, preferred compositions 122, further preferred compositions 124) and described with respect to Figure 3 so as to have the desired relative compressor discharge temperature.

### Refrigerant Compositions including R1225ye(E), R125, and R32

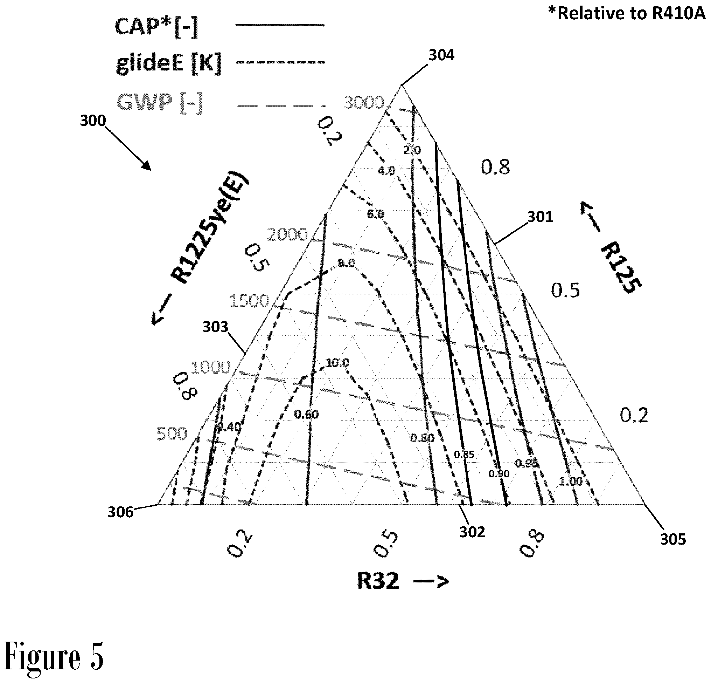

Figure 5 illustrates a matrix 300 of refrigerant compositions of R1225ye(E), R125, and R32 that was developed to show plots of GWP, temperature glide, and capacity relative to R410A as a function of the concentration of R1225ye(E), R125, and R32. Each side 301, 302, 303 of the triangle corresponds to weight percentages of R125, R32, and R1225ye(E), respectively. Each vertex 304, 305, 306 of the triangle corresponds to a composition of 100 wt% R125, 100 wt% R32, and 100 wt% R1225ye(E), respectively. Properties (e.g., GWP, capacity relative to R410A, temperature glide) of a refrigerant composition with a weight percent of R1225ye(E), a weight percent of R125, and a weight percent of R32 can be determined using the matrix 300.

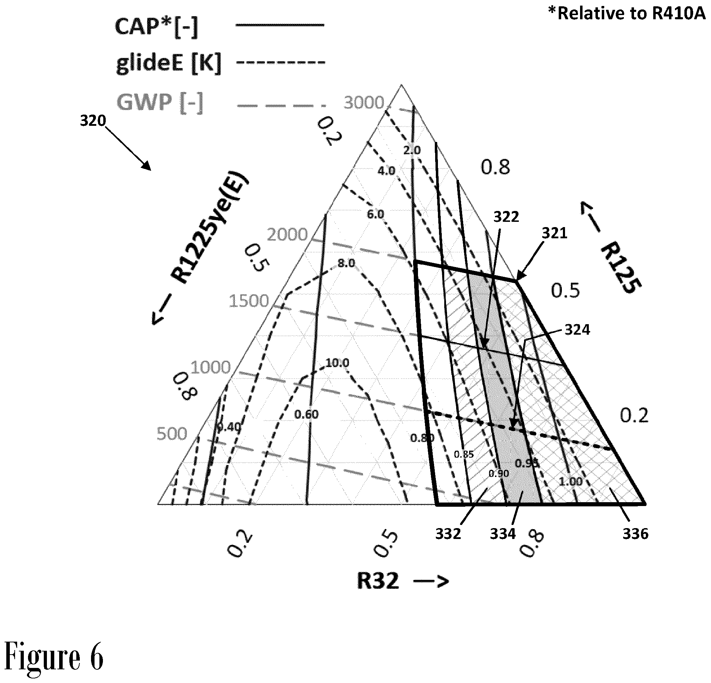

Figure 6 illustrates a matrix 320 based on matrix 300 of Figure 5 and that has the same sides and vertices as the matrix 300 of Figure 5. The matrix 320 is the same as the matrix 300 of Figure 5. Matrix 320 can be used in a method of making a refrigerant composition including R1225ye(E), R125, and R32 and/or in a method of retrofitting a refrigerant composition so that the resulting refrigerant composition/retrofit refrigerant composition has one or more desired properties.

In an embodiment, a desired set of properties of a useful refrigerant composition includes a GWP of less than 2000 and a capacity that is at or about 80% or greater than 80% of the capacity of R410A.

Based on these desired properties, a range of useful refrigerant compositions 321 is shown in matrix 320 of Figure 6. The useful refrigerant compositions 321 include at or about 24 wt%, or greater than 24 wt% and less than 100 wt% of R32; at or about 58 wt%, or less than 58 wt% and greater than 0 wt% of R125; and at or about 42 wt%, or less than 42 wt% and greater than 0% of R1225ye(E). Further, the useful refrigerant compositions 121 are also non-flammable.

In an embodiment, the useful compositions 321 may include preferred compositions 322 as shown in Figure 6. The properties of the preferred compositions 322 include a GWP of less than 1500 and a capacity that is at or about 80% or greater than 80% of the capacity of R410A. The preferred compositions 322 include at or about 33 wt%, or greater than 33 wt% and less than 100 wt% of R32; at or about 40 wt%, or less than 40 wt% and greater than 0 wt% of R125; and at or about 42 wt%, or less than 42 wt% and greater than 0% of R1225ye(E).

In an embodiment, the useful compositions 321 may include further preferred compositions 324 as shown in Figure 6. The properties of the further preferred compositions 324 include a GWP of less than 1000 and a capacity that is at or about 80% or greater than 80% of the capacity of R410A. The further preferred compositions 324 include at or about 43 wt%, or greater than 43 wt% and less than 100 wt% of R32; at or about 23 wt%, or less than 23 wt% and greater than 0 wt% of R125; and at or about 42 wt%, or less than 42 wt% and greater than 0% of R1225ye(E).

Figure 6 also includes a first hatched area 322, a shaded area 334, and a second hatched area 336. The compositions in the shaded area 332 and the hatched areas 334, 336 have a capacity that is at or about 85% or greater than 85% of the capacity of 410A. In some embodiments, a set of desired properties may include the higher capacity provided by the compositions within the shaded and hatched areas 322, 334, 336. In such embodiments, desired compositions may be selected from the compositions shown in Figure 6 (e.g., useful compositions 321, preferred compositions 322, further preferred compositions 324) and described with respect to Figure 6 so as to be within the shaded and hatched areas 321, 322, 324.

For example, such desired compositions of the useful compositions 321 include at or about 30 wt%, or greater than 30 wt% and less than 100 wt% of R32; at or about 57%, or less than 57 wt% and greater than 0 wt% of R125; and at or about 36 wt%, or less than 36 wt% and greater than 0 wt% of R1225ye(E). These desired compositions of the useful compositions 321 also have a temperature glide of less than 8°C.

For example, such desired compositions of the preferred compositions 322 include at or about 40 wt%, or greater than 40 wt% and less than 100 wt% of R32; at or about 39 wt%, or less than 39 wt% and greater than 0 wt% of R125; and at or about 36 wt%, or less than 36 wt% and greater than 0% of R1225ye(E). These desired compositions of the preferred compositions 322 also have a temperature glide of less than 8°C.

For example, such desired compositions of the further preferred compositions 324 include at or about 51 wt%, or greater than 51 wt% and less than 100 wt% of R32; at or about 21 wt%, or less than 21 wt% and greater than 0 wt% of R125; and at or about 36 wt%, or less than 36 wt% and greater than 0% of R1225ye(E). These desired compositions of the preferred compositions 322 also have a temperature glide of less than 8°C.

The compositions in the shaded area 334 and the second hatched area 336 have a capacity that is at or about 90% or greater than 90% of the capacity of 410A. In some embodiments, a set of desired properties may include the higher capacity provided by the compositions within the shaded area 334 or the second hatched area 336. In such embodiments, desired compositions may be selected from the compositions shown in Figure 6 (e.g., useful compositions 321, preferred compositions 322, further preferred compositions 324) and described with respect to Figure 6 so as to be within the shaded area 334 or the second hatched area 336.

For example, such desired compositions of the useful compositions 321 include at or about 36 wt%, or greater than 36 wt% and less than 100 wt% of R32; at or about 56%, or less than 56 wt% and greater than 0 wt% of R125; and at or about 28 wt%, or less than 28 wt% and greater than 0 wt% of R1225ye(E). These desired compositions of the useful compositions 321 also have a temperature glide of less than 7°C.

For example, such desired compositions of the preferred compositions 322 include at or about 47 wt%, or greater than 47 wt% and less than 100 wt% of R32; at or about 38 wt%, or less than 38 wt% and greater than 0 wt% of R125; and at or about 28 wt%, or less than 28 wt% and greater than 0% of R1225ye(E). These desired compositions of the preferred compositions 322 also have a temperature glide of less than 7°C.

For example, such desired compositions of the further preferred compositions 324 include at or about 60 wt%, or greater than 60 wt% and less than 100 wt% of R32; at or about 18 wt%, or less than 18 wt% and greater than 0 wt% of R125; and at or about 28 wt%, or less than 28 wt% and greater than 0% of R1225ye(E). These desired compositions of the preferred compositions 322 also have a temperature glide of less than 7°C.

The compositions in the second hatched area 336 have a capacity that is at or about 95% or greater than 95% of the capacity of 410A. In some embodiments, a set of desired properties may include the higher capacity provided by the compositions within the second hatched area 336. In such embodiments, desired compositions may be selected from the compositions shown in Figure 6 (e.g., useful compositions 321, preferred compositions 322, further preferred compositions 324) and described with respect to Figure 6 so as to be within the second hatched area 336.

For example, such desired compositions of the useful compositions 321 include at or about 41 wt%, or greater than 41 wt% and less than 100 wt% of R32; at or about 55%, or less than 55 wt% and greater than 0 wt% of R125; and at or about 23 wt%, or less than 23 wt% and greater than 0 wt% of R1225ye(E). These desired compositions of the useful compositions 321 also have a temperature glide of less than 5°C.

For example, such desired compositions of the preferred compositions 322 include at or about 54 wt%, or greater than 54 wt% and less than 100 wt% of R32; at or about 36 wt%, or less than 36 wt% and greater than 0 wt% of R125; and at or about 23 wt%, or less than 23 wt% and greater than 0% of R1225ye(E). These desired compositions of the preferred compositions 322 also have a temperature glide of less than 5°C.

For example, such desired compositions of the further preferred compositions 324 include at or about 66 wt%, or greater than 66 wt% and less than 100 wt% of R32; at or about 17 wt%, or less than 17 wt% and greater than 0 wt% of R125; and at or about 23 wt%, or less than 23 wt% and greater than 0% of R1225ye(E). These desired compositions of the preferred compositions 322 also have a temperature glide of less than 5°C.

In some embodiments, a set of desired properties for a refrigerant composition may include a different GWP than discussed above. In an embodiment, a refrigerant composition having a GWP of at or about 1500 or less than 1500 may be desired. In an embodiment, a refrigerant composition having a GWP of at or about 500 or less than 500 may be desired.

In some embodiments, a set of desired properties for a refrigerant composition may include temperature glide. In an embodiment, a refrigerant composition having a temperature glide of at or about 8°K or less than 8°K may be desired. In an embodiment, a refrigerant composition having a temperature glide of at or about 6°K or less than 6°K may be desired. In an embodiment, a refrigerant composition having a temperature glide of at or about 4°K or less than 4°K may be desired. In an embodiment, a refrigerant composition having a temperature glide of at or about 2°K or less than 2°K may be desired.

In such embodiments, desired compositions may be selected from the compositions shown in Figure 6 (e.g., useful compositions 321, preferred compositions 322, further preferred compositions 324) and described with respect to Figure 6 so as to have the desired set of properties of GWP and/or temperature glide.

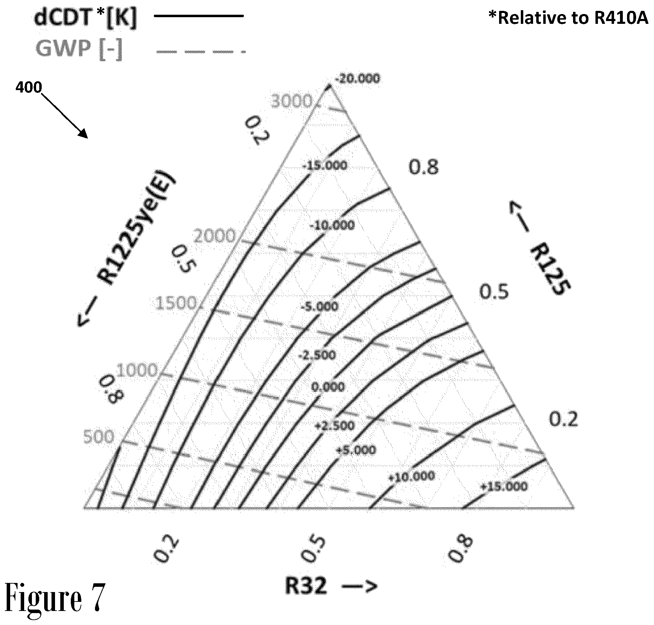

Figure 7 shows an embodiment of a matrix 400 of refrigerant compositions of R1225ye(E), R125, and R32 that was developed to show plots of GWP and compressor discharge temperature ("dCDT") relative to 410A as a function of the concentration of R1225ye(E), R125, and R32. The matrix 400 has similar sides and vertices as the matrix 300 in Figure 6.

In some embodiments, a set of desired properties for a refrigerant composition may include compressor discharge temperature relative to R410A. In an embodiment, a refrigerant composition that provides a compressor discharge temperature of at or about -2.5°K or greater than -2.5°K relative to R410A may be desired. In an embodiment, a refrigerant composition that provides a compressor discharge temperature of at or about 15°K or less than 15°K relative to R410A may be desired. In an embodiment, a refrigerant composition that provides a compressor discharge temperature of at or about 10°K or less than 10°K relative to R410A may be desired. In an embodiment, a refrigerant composition that provides a compressor discharge temperature of at or about 5°K or less than 5°K relative to R410A may be desired. In an embodiment, a refrigerant composition that provides a compressor discharge temperature of at or about 2.5°K or less than 2.5°K relative to R410A may be desired.

In such embodiments, desired compositions may be selected from the compositions shown in Figure 6 (e.g., useful compositions 321, preferred compositions 322, further preferred compositions 324) and described with respect to Figure 6 so as to have the desired relative compressor discharge temperature.

### Refrigerant Compositions including R1225ye(E), R1234yf, and R32

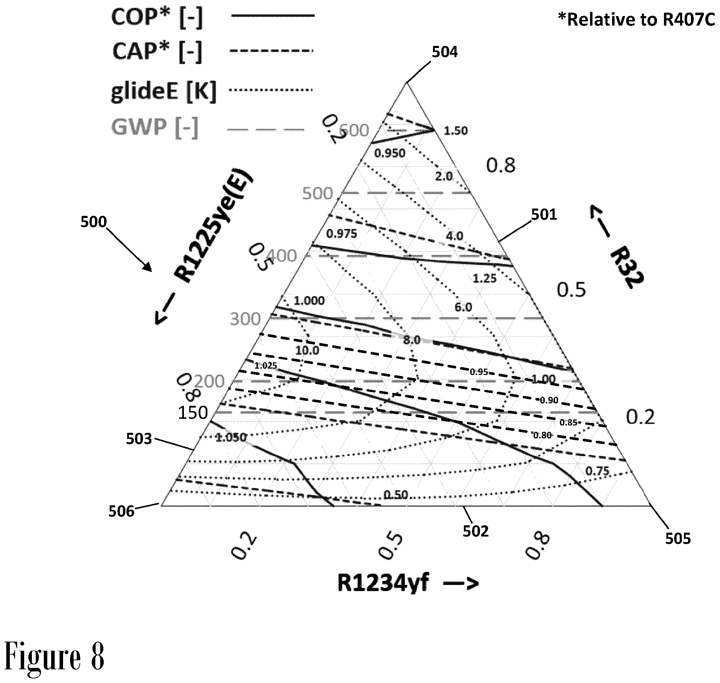

Figure 8 illustrates a matrix 500 of refrigerant compositions of R1225ye(E), R1234yf, and R32 that was developed to show plots of GWP, temperature glide, capacity relative to R407C, and COP relative to R407C as a function of the concentration of R1225ye(E), R1234yf, and R32. Each side 501, 502, 503 of the triangle corresponds to weight percentages of R32, R1234yf, and R1225ye(E), respectively. Each vertex 504, 505, 506 of the triangle corresponds to a composition of 100 wt% R32, 100 wt% R1234yf, and 100 wt% R1225ye(E), respectively. Properties (e.g., GWP, COP relative to 407C, capacity relative to 407C, temperature glide) of a refrigerant composition with a weight percent of R1225ye(E), a weight percent of R1234yf, and a weight percent of R32 can be determined using the matrix 500.

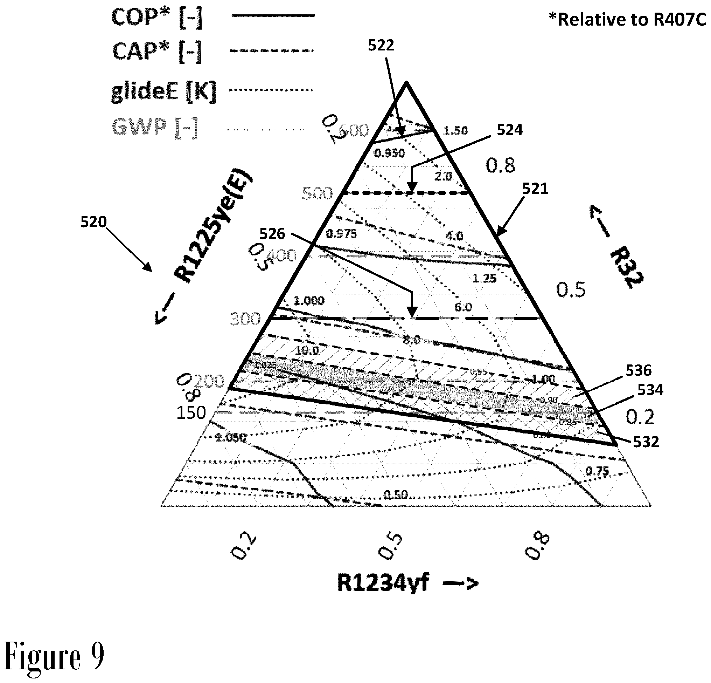

Figure 9 illustrates a matrix 520 based on matrix 500 of Figure 8 and that has the same sides and vertices as the matrix 500 of Figure 8. The matrix 520 is the same as the matrix 500 of Figure 8. Matrix 320 can be used in a method of making a refrigerant composition including R1225ye(E), R1234yf, and R32 and/or in a method of retrofitting a refrigerant composition so that the resulting refrigerant composition/retrofit refrigerant composition has one or more desired properties.

In an embodiment, a desired set of properties of a useful refrigerant composition includes a GWP of less than 700 and a capacity that is at or about 80% or greater than 80% of the capacity of R407C.

Based on these desired properties, a range of useful refrigerant compositions 521 is shown in matrix 520 of Figure 9. The useful refrigerant compositions 521 include at or about 14 wt%, or greater than 14 wt% and less than 100 wt% of R32; at or about 86 wt%, or less than 86 wt% and greater than 0 wt% of R1234yf; and at or about 73 wt%, or less than 73 wt% and greater than 0% of R1225ye(E). Further, the useful refrigerant compositions 121 are also non-flammable.

In an embodiment, the useful compositions 521 may include preferred compositions 522 as shown in Figure 9. The properties of the preferred compositions 522 include a GWP of at or about 600 or less than 600, a capacity that is at or about 80% or greater than 80% of the capacity of R407C, and a COP that is at or about 95% or greater than 95% of the COP of R407C. The preferred compositions 522 include from at or about 14 wt% to at or about 89 wt% of R32; at or about 86 wt%, or less than 86 wt% and greater than 0 wt% of R1234yf; and at or about 73 wt%, or less than 73 wt% and greater than 0% of R1225ye(E). Further, the preferred refrigerant compositions 522 are also non-flammable.

In an embodiment, preferred compositions 522 may include further preferred compositions 524 as shown in Figure 9. The properties of the further preferred compositions 324 include a GWP of at or about 500 or less than 500, a capacity that is at or about 80% or greater than 80% of the capacity of R407C, and a COP that is greater than 95% of the COP of R407C. The further preferred compositions 524 include from at or about 14 wt% to at or about 74 wt% of R32; at or about 86 wt%, or less than 86 wt% and greater than 0 wt% of R1234yf; and at or about 73 wt%, or less than 73 wt% and greater than 0% of R1225ye(E). Further, the preferred refrigerant compositions 522 are also non-flammable.

In an embodiment, the further preferred compositions 524 may include greater preferred compositions 526 as shown in Figure 9. The properties of the greater preferred compositions 526 include a GWP of at or about 300 or less than 300, a capacity that is at or about 80% or greater than 80% of the capacity of R407C, and a COP that is greater than 97.5% of the COP of R407C. The greater preferred compositions 526 include from at or about 14 wt% to at or about 45 wt% of R32; at or about 86 wt%, or less than 86 wt% and greater than 0 wt% of R1234yf; and at or about 73 wt%, or less than 73 wt% and greater than 0% of R1225ye(E). Further, the preferred refrigerant compositions 522 are also non-flammable.

Figure 9 also includes a first hatched area 532. The compositions in the first hatched area 532 have less than at or about 85% of the capacity of R407C. In some embodiments, a set of desired properties may include the higher capacity provided by the compositions not within the first hatched area 532 (e.g., a capacity that is at or about or greater than 85% of the capacity of R407C). In such embodiments, desired compositions may be selected from the compositions shown in Figure 9 (e.g., useful compositions 521, preferred compositions 522, further preferred compositions 524) and described with respect to Figure 9 so as to omit the compositions within the first hatched area 532.

For example, such desired compositions of the useful compositions 521 include at or about 18 wt%, or greater than 18 wt% and less than 100 wt% of R32; at or about 82 wt%, or less than 82 wt% and greater than 0 wt% of R1234yf; and at or about 68 wt%, or less than 68 wt% and greater than 0% of R1225ye(E).

For example, such desired compositions of the preferred compositions 522 include at or about 18 wt% to at or about 89 wt% of R32; at or about 82 wt%, or less than 82 wt% and greater than 0 wt% of R1234yf; and at or about 68 wt%, or less than 68 wt% and greater than 0% of R1225ye(E).

For example, such desired compositions of the further preferred compositions 524 include from at or about 18 wt% to at or about 74 wt% of R32; at or about 82 wt%, or less than 82 wt% and greater than 0 wt% of R1234yf; and at or about 68 wt%, or less than 68 wt% and greater than 0% of R1225ye(E).

For example, such desired compositions of the greater preferred compositions 526 include from at or about 18 wt% to at or about 45 wt% of R32; at or about 82 wt%, or less than 82 wt% and greater than 0 wt% of R1234yf; and at or about 68 wt%, or less than 68 wt% and greater than 0% of R1225ye(E)

Figure 9 also includes a shaded area 534. The compositions in the first hatched area 532 and the shaded area 534 have less than at or about 90% of the capacity of R407C. In some embodiments, a set of desired properties may include the higher capacity provided by the compositions not within the first hatched area 532 and the shaded area 534 (e.g., a capacity that is at or about or greater than 90% of the capacity of R407C). In such embodiments, desired compositions may be selected from the compositions shown in Figure 9 (e.g., useful compositions 521, preferred compositions 522, further preferred compositions 524) and described with respect to Figure 9 so as to omit the compositions within the first hatched area 532 and the shaded area 534.

For example, such desired compositions of the useful compositions 521 include at or about 24 wt%, or greater than 24 wt% and less than 100 wt% of R32; at or about 76 wt%, or less than 76 wt% and greater than 0 wt% of R1234yf; and at or about 64 wt%, or less than 64 wt% and greater than 0% of R1225ye(E).

For example, such desired compositions of the preferred compositions 522 include at or about 24 wt% to at or about 89 wt% of R32; at or about 76 wt%, or less than 76 wt% and greater than 0 wt% of R1234yf; and at or about 64 wt%, or less than 64 wt% and greater than 0% of R1225ye(E)

For example, such desired compositions of the further preferred compositions 524 include from at or about 24 wt% to at or about 74 wt% of R32; at or about 76 wt%, or less than 76 wt% and greater than 0 wt% of R1234yf; and at or about 64 wt%, or less than 64 wt% and greater than 0% of R1225ye(E).

For example, such desired compositions of the greater preferred compositions 526 include from at or about 24 wt% to at or about 45 wt% of R32; at or about 76 wt%, or less than 76 wt% and greater than 0 wt% of R1234yf; and at or about 64 wt%, or less than 64 wt% and greater than 0% of R1225ye(E).

Figure 9 also includes a second hatched area 536. The compositions in the first hatched area 532, the shaded area 534, and the second hatched area 536 have less than at or about 95% of the capacity of R407C. In some embodiments, a set of desired properties may include the higher capacity provided by the compositions not within the first hatched area 532, the shaded area 534, and the second hatched area 532 (e.g., a capacity that is at or about or greater than 95% of the capacity of R407C). In such embodiments, desired compositions may be selected from the compositions shown in Figure 9 (e.g., useful compositions 521, preferred compositions 522, further preferred compositions 524) and described with respect to Figure 9 so as to omit the compositions within the first hatched area 532, the shaded area 534, and the second hatched area 536.

For example, such desired compositions of the useful compositions 521 include at or about 27 wt%, or greater than 27 wt% and less than 100 wt% of R32; at or about 73 wt%, or less than 73 wt% and greater than 0 wt% of R1234yf; and at or about 59 wt%, or less than 59 wt% and greater than 0% of R1225ye(E).

For example, such desired compositions of the preferred compositions 522 include at or about 27 wt% to at or about 89 wt% of R32; at or about 73 wt%, or less than 73 wt% and greater than 0 wt% of R1234yf; and at or about 59 wt%, or less than 59 wt% and greater than 0% of R1225ye(E).

For example, such desired compositions of the further preferred compositions 524 include from at or about 27 wt% to at or about 74 wt% of R32; at or about 73 wt%, or less than 73 wt% and greater than 0 wt% of R1234yf; and at or about 59 wt%, or less than 59 wt% and greater than 0% of R1225ye(E).

For example, such desired compositions of the greater preferred compositions 526 include from at or about 27 wt% to at or about 74 wt% of R32; at or about 73 wt%, or less than 73 wt% and greater than 0 wt% of R1234yf; and at or about 59 wt%, or less than 59 wt% and greater than 0% of R1225ye(E).

In some embodiments, a set of desired properties for a refrigerant composition may include a different GWP than discussed above. In an embodiment, a refrigerant composition having a GWP of at or about 400 or less than 400 may be desired. In an embodiment, a refrigerant composition having a GWP of at or about 200 or less than 200 may be desired. In an embodiment, a refrigerant composition having a GWP of at or about 150 or less than 150 may be desired.

In some embodiments, a set of desired properties for a refrigerant composition may include temperature glide. In an embodiment, a refrigerant composition having a temperature glide of at or about 6°K or less than 6°K may be desired. For example, a temperature glide of about 6°K may be desired for systems that are configured to operate using R407C or at similar parameters to a system using R407C (e.g., a replacement/substitute refrigerant for R407C, a refrigerant having similar properties to R407C). In an embodiment, a refrigerant composition having a temperature glide of at or about 10°K or less than 10°K may be desired. In an embodiment, a refrigerant composition having a temperature glide of at or about 8°K or less than 8°K may be desired. In an embodiment, a refrigerant composition having a temperature glide of at or about 4°K or less than 4°K may be desired.

In such embodiments, desired compositions may be selected from the compositions shown in Figure 9 (e.g., useful compositions 521, preferred compositions 522, further preferred compositions 524, greater preferred compositions 526) and described with respect to Figure 9 so as to have the desired set of properties of GWP and/or temperature glide.

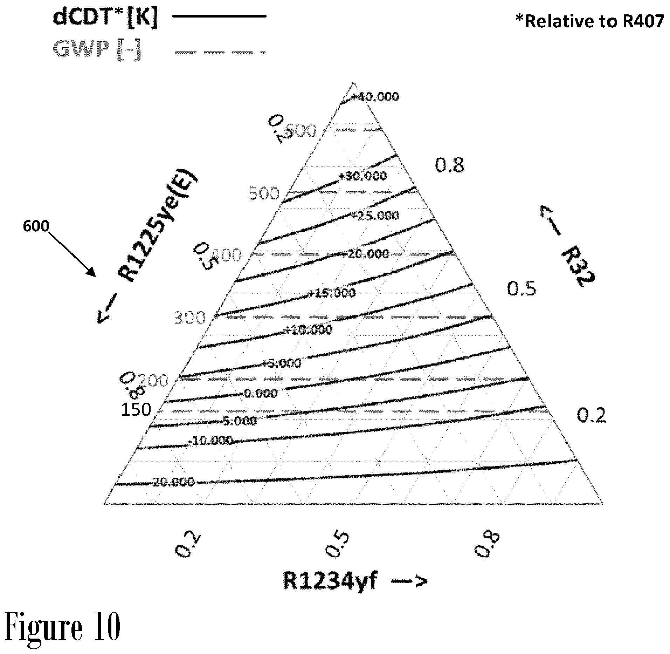

Figure 10 shows an embodiment of a matrix 600 of refrigerant compositions of R1225ye(E), R1234yf, and R32 that was developed to show plots of GWP and compressor discharge temperature ("dCDT") relative to 407C as a function of the concentration of R1225ye(E), R1234yf, and R32. The matrix 600 has similar sides and vertices as the matrix 500 in Figure 8.

In some embodiments, a set of desired properties for a refrigerant composition may include compressor discharge temperature relative to R407C. In an embodiment, a refrigerant composition that provides a compressor discharge temperature of at or about 30°K or less than 30°K relative to R407C may be desired. In an embodiment, a refrigerant composition that provides a compressor discharge temperature of at or about 25°K or less than 25°K relative to R407C may be desired. In an embodiment, a refrigerant composition that provides a compressor discharge temperature of at or about 20°K or less than 20°K relative to R407C may be desired. In an embodiment, a refrigerant composition that provides a compressor discharge temperature of at or about 15°K or less than 15°K relative to R407C may be desired. In an embodiment, a refrigerant composition that provides a compressor discharge temperature of at or about 10°K or less than 10°K relative to R407C may be desired. In an embodiment, a refrigerant composition that provides a compressor discharge temperature of at or about 5°K or less than 5°K relative to R407C may be desired.

In such embodiments, desired compositions may be selected from the compositions shown in Figure 9 (e.g., useful compositions 521, preferred compositions 522, further preferred compositions 524, greater preferred compositions 526) and described with respect to Figure 9 so as to have the desired relative compressor discharge temperature.

In an embodiment, a method of making a refrigerant composition and/or a method of retrofitting a refrigerant composition utilizes one or more of the matrices of Figures 2 - 9 so that the resulting refrigerant composition or retrofit refrigerant composition has the desired set of properties.

It should be noted that a working fluid may include one or more additional non-refrigerant components in addition to a refrigerant composition. Additional components may be, for example impurities, lubricants, refrigeration system additives, tracers, ultraviolet ("UV") dyes, and solubilizing agents. In general, these additional components are present in small amounts relative to the refrigerant composition. For example, up to 3% of each additional component may be present in a working fluid. A working fluid, depending upon its components, may have at or about 5 wt% or less than 5 wt% of some additives, such as lubricants, in a particular location or piece of equipment in a refrigerant circuit. In an embodiment, one or more additional components would be added in addition to the refrigerant compositions described.

In an embodiment, a working fluid may include one or more impurities. An impurity may be, for example, a previous refrigerant or refrigerant blend used in an HVACR system. An impurity may be, for example, particulates (e.g., metal particles, metal salts, elastomer particles) from equipment of the HVACR system and other contaminants that may adversely affect a working fluid.

In an embodiment, a working fluid may include one or more lubricants that are compatible with the refrigerant composition. For example, a lubricant may be a lubricant that is designed for use with and is compatible with refrigerant compositions described herein (e.g., R515B, R1234ze(E), R410A, R407C). Further, the lubricant may be based on the HVACR system that will be using the working fluid. For example, a lubricant may be selected based on being suitable for use with the HVACR system and its equipment (e.g., compressor 10 in Figure 1), the environment in which the refrigerant may be exposed to.

Lubricants include those conventionally used in compression refrigeration apparatus utilizing chlorofluorocarbon refrigerants. For example, such lubricants and their properties are discussed in the 1990 ASHRAE Handbook, Refrigeration Systems and Applications, chapter 8, titled "Lubricants in Refrigeration Systems", pages 8.1 through 8.21. Lubricants may include those that have been designed for use with hydrofluorocarbon refrigerants and are miscible with refrigerant compositions described herein under compression refrigeration, air-conditioning, or heat pump apparatus' operating conditions. Such lubricants and their properties are discussed in "Synthetic Lubricants and High-Performance Fluids", R. L. Shubkin, editor, Marcel Dekker, 1993. Such lubricants include, but are not limited to, polyol esters (POEs) such as Castrol^{®} 100 (Castrol, United Kingdom), polyalkylene glycols (PAGs) such as RL-488A from Dow (Dow Chemical, Midland, Mich.), and polyvinyl ethers (PVEs). These lubricants are readily available from various commercial sources.

Lubricants may include those lubricants known as "mineral oils" and/or those lubricants known as "synthetic oils" in the field of compression refrigeration lubrication. For example, mineral oils may include paraffins (i.e. straight-chain and branched-carbon-chain, saturated hydrocarbons), naphthenes (i.e. cyclic paraffins) and aromatics (i.e. unsaturated, cyclic hydrocarbons containing one or more rings characterized by alternating double bonds). For example, synthetic oils may include alkylaryls (i.e. linear and branched alkyl alkylbenzenes), synthetic paraffins and naphthenes, and poly(alphaolefins). Representative conventional lubricants may include the commercially available BVM 100 N (paraffinic mineral oil sold by BVA Oils), Suniso^{®} 3GS and Suniso^{®} 5GS (naphthenic mineral oil sold by Crompton Co.), Sontex^{®} 372LT (naphthenic mineral oil sold by Pennzoil), Calumet^{®} RO-30 (naphthenic mineral oil sold by Calumet Lubricants), Zerol^{®} 75, Zerol^{®} 150 and Zerol^{®} 500 (linear alkylbenzenes sold by Shrieve Chemicals), and HAB 22 (branched alkylbenzene sold by Nippon Oil).

In an embodiment, refrigeration system additives may include lubrication enhancing additives and anti-wear additives. Lubrication enhancing additives may include, for example, alkyl or aryl esters of phosphoric acid and of thiophosphates. Additionally, the metal dialkyl dithiophosphates (e.g. zinc dialkyl dithiophosphate or ZDDP, Lubrizol 1375) and other members of this family of chemicals may be used in compositions of the present invention. Other anti-wear additives include natural product oils and asymmetrical polyhydroxyl lubrication additives such as Synergol TMS (International Lubricants). Similarly, stabilizers such as antioxidants, free radical scavengers, and water scavengers may be employed. Compounds in this category can include, but are not limited to, butylated hydroxy toluene (BHT) and epoxides.

Lubricants may be selected by considering a given compressor's requirements and the environment to which the lubricant will be exposed. In some embodiments, lubricants may have a kinematic viscosity of at least about 5 cs (centistokes) at 40° C.

In an embodiment, a working fluid may include one or more tracers. The tracers may be used in detecting if any dilution, contamination, or other alteration of the working fluid (which includes the refrigerant composition) has occurred. The tracers may be selected from, for example, the group including hydrofluorocarbons (HFCs), deuterated hydrocarbons, deuterated hydrofluorocarbons, perfluorocarbons, fluoroethers, brominated compounds, iodated compounds, alcohols, aldehydes, ketones, nitrous oxide (N2O) and combinations thereof. The tracer compounds are added to the working fluid in previously determined quantities to allow detection of any dilution, contamination or other alteration of the composition. Single tracer compounds may be used in combination with a refrigeration composition in the working fluid or multiple tracer compounds may be combined in any proportion to serve as a tracer blend. The tracer blend may contain multiple tracer compounds from the same class of compounds or multiple tracer compounds from different classes of compounds. For example, a tracer blend may contain two or more deuterated hydrofluorocarbons, or one deuterated hydrofluorocarbon in combination with one or more perfluorocarbons.

In an embodiment, a working fluid may include one or more UV dyes. A UV dye may allow a person (e.g., operator, field technician) to observe leaks in or near the HVACR system. Due to the low solubility of some UV dyes with some refrigerant compositions, a solubilizing agent may be included with the UV dye. An "ultra-violet" (UV) dye is a UV fluorescent composition that absorbs light in the ultra-violet or "near" ultra-violet region of the electromagnetic spectrum. The fluorescence produced by the UV fluorescent dye under illumination by a UV light that emits radiation with wavelength from 10 nanometers to 750 nanometers may be detected. Therefore, if a composition containing such a UV fluorescent dye is leaking from a given point in a refrigeration, air-conditioning, or heat pump apparatus, the fluorescence can be detected at the leak point. Such UV fluorescent dyes include but are not limited to naphthalimides, perylenes, coumarins, anthracenes, phenanthracenes, xanthenes, thioxanthenes, naphthoxanthenes, fluoresceins, and derivatives or combinations thereof.

In an embodiment, solubilizing agents may include at least one compound selected from the group including hydrocarbons, hydrocarbon ethers, dimethylether, polyoxyalkylene glycol ethers, amides, nitriles, ketones, chlorocarbons, esters, lactones, aryl ethers, fluoroethers and 1,1,1-trifluoroalkanes. The polyoxyalkylene glycol ethers, amides, nitriles, ketones, chlorocarbons, esters, lactones, aryl ethers, fluoroethers and 1,1,1-trifluoroalkanes solubilizing agents are defined herein as being compatibilizers for use with conventional refrigeration lubricants.

In an embodiment, hydrocarbon solubilizing agents may include hydrocarbons including straight chained, branched chain or cyclic alkanes or alkenes containing five or fewer carbon atoms and only hydrogen with no other functional groups. Representative hydrocarbon solubilizing agents include propane, propylene, cyclopropane, n-butane, isobutane, 2-methylbutane and n-pentane. It is appreciated that if the composition contains a hydrocarbon, then the solubilizing agent may not be the same hydrocarbon. Hydrocarbon ether solubilizing agents may include ethers containing only carbon, hydrogen and oxygen, such as dimethyl ether (DME).

Solubilizing agents may be present as a single compound, or may be present as a mixture of more than one solubilizing agent. Mixtures of solubilizing agents may contain two solubilizing agents from the same class of compounds for example two lactones, or two solubilizing agents from two different classes, such as a lactone and a polyoxyalkylene glycol ether.

Solubilizing agents such as ketones may have an objectionable odor, which can be masked by addition of an odor masking agent or fragrance. Typical examples of odor masking agents or fragrances may include Evergreen, Fresh Lemon, Cherry, Cinnamon, Peppermint, Floral or Orange Peel all commercially available, as well as d-limonene and pinene. Such odor masking agents may be used at concentrations of from about 0.001% to as much as about 15% by weight based on the combined weight of odor masking agent and solubilizing agent.

Often replacement refrigerants are most useful if capable of being used in the original refrigeration equipment designed for a different refrigerant. Refrigerant compositions disclosed herein may be useful as replacements in the original equipment.

In some embodiments, the properties (e.g. capacity, temperature glide, COP, compressor discharge temperature) of the refrigerant compositions herein may be made to resemble or match (e.g., have similar properties) an existing refrigerant (e.g. R410A, R515B, R1234ze(E), or R407C), so that the refrigerant composition can be used to replace (e.g. drop in) the existing refrigerant. In some embodiments, the refrigerant composition may be used to replace the existing refrigerant in a HVAC system. The replaced refrigerant may be reclaimed and/or repurposed to other applications. In some embodiments, the refrigerant composition may be used in a HVAC system with a screw compressor, a scroll compressor, a reciprocating compressor, or other suitable compressors.

In an embodiment, a refrigerant composition in a HVACR system may be retrofitted. The refrigerant composition is an existing refrigerant composition of the HVACR that is retrofitted to have a desired set of properties. In an embodiment, an existing refrigerant composition is retrofitted so as to result in a retrofit refrigerant composition that includes R1225ye(E), R1234ze(E), and R227ea. In an embodiment, an existing refrigerant composition is retrofitted so as to result in a retrofit refrigerant composition that includes R1225ye(E), R125, and R32. In an embodiment, an existing refrigerant composition is retrofitted so as to result in a retrofit refrigerant composition that includes R1225ye(E), R1234yf, and R32. In an embodiment, the existing refrigerant composition includes at least one of R1234ze(E), R32, R227ea, and R125, and R1234yf.

In an embodiment, an HVACR utilizes an existing refrigerant composition including at least one of R1234ze(E), R32, R227ea, and R125, and R1234yf, and a method of retrofitting the refrigerant composition includes adding an amount of at least one refrigerant to an existing refrigerant composition to produce a retrofit refrigerant composition.

In an embodiment where the HVACR system is designed to utilize a refrigerant composition similar to R515B or R1234ze(E), retrofit refrigerant composition(s) with the desired properties can be determined using, for example, one or more of the matrices in Figures 2-4 and their accompanying description. In an embodiment where the HVACR system is designed to utilize a refrigerant composition similar to R410A, retrofit refrigerant composition(s) with the desired properties can be determined using, for example, one or more of the matrices in Figures 5 - 7 and their accompanying description. In an embodiment where the HVACR system is designed to utilize a refrigerant composition similar to R407C, retrofit refrigerant composition(s) with the desired properties can be determined using, for example, one or more of the matrices in Figures 8 - 10 and their accompanying description.

Generally, a method of making a refrigerant composition with a desired set of properties may include determining the desired set of properties, and selecting at least one refrigerant for each of the properties in the desired set of properties. The refrigerant(s) selected to exhibit the desired property has a property value that is better than the property value of the desired property exhibited by the other refrigerants in the composition. The method may also include mixing the selected refrigerants in a suitable mass fraction so that the resulting refrigerant composition has the desired set of properties. In some embodiments, a matrix can be made to represent a correlation of property value changes in response to mass fraction changes in the selected refrigerants. Suitable refrigerant composition ranges to achieve the desired set of properties may be selected from the matrix by defining boundary property values in the matrix. The method disclosed herein can provide flexibility in making a refrigerant to satisfy, for example, different design requirements.

In some embodiments, the method of making a refrigerant composition for a HVACR system includes reducing the flammability of a refrigerant composition and/or balancing performance characteristics and GWP of the refrigerant composition (e.g. minimizing GWP, and maximizing performance characteristics).

In an embodiment, a method for making a refrigerant composition for a HVACR system includes mixing at least an amount of R1225ye(E), an amount of a second refrigerant, and an amount of a third refrigerant. The second refrigerant is one of R1234ze(E) and R32. The third refrigerant that is one of R227ea refrigerant, R125 refrigerant, and R1234yf refrigerant. The amounts of the R1225ye(E), the second refrigerant, and the third refrigerant may be selected so that the refrigerant composition has one or more desired properties. A desired property may be, for example, capacity, GWP, temperature glide, a coefficient of performance, and/or compressor discharge temperature.

In some embodiments, the performance characteristic(s) of the resulting refrigerant composition may be simulated and/or estimated by an Excel-based thermodynamic cycle calculation tool, such as for example NIST's REFPROP program. It is noted that the capacity may be provided, for example, in a measurement performed in a lab and/or in a computer based simulation. The capacity and compressor discharge temperature may be provided based on operation conditions provided in the Standard for Performance Rating of Unitary Air-Conditioning & Air-source Heat Pump Equipment (e.g. Air-Conditioning, Heating and Refrigeration Institute Standard (AHRI Std) 210/240 "A" rating point). For example, capacity and compressor discharge temperature relative to R515B and R410A may be provided using the operation conditions provided in the Standard for Performance Rating of Unitary Air-Conditioning & Air-source Heat Pump Equipment. For example, operation conditions for providing capacity and compressor discharge temperature relative to R407C may be provided using the operating conditions in Table 1 below.

**Table 1: Operating Conditions for performance relative to R407C**

| | |
|---|---|
| **T_{Evap}** | **35°F** |
| **T_{cond}** | **130°F** |
| **DTSH** | **25°F** |
| **DTSC** | **25°F** |
| **Glide Ew*** | **0.5** |
| **Glide Cw*** | **0.5** |
| **η_{Cmpr}** | **0.6** |

| | |
|---|---|
| *Condenser/Evaporator heat exchanger glide weighting at midpoint conditions | |

In some embodiments, the properties (e.g. GWP, capacity, and/or compressor discharge t) of the refrigerant compositions herein may be made to resemble or match an existing refrigerant (e.g. R515B, R1234ze(E), R410A, or R407C) so that the refrigerant composition can be used to replace (e.g. drop in) the existing refrigerant. In some embodiments, the refrigerant composition may be used to replace the existing refrigerant in a HVAC system. The replaced refrigerant may be reclaimed and/or repurposed to other applications. In some embodiments, the refrigerant composition may be used in a HVAC system with a screw compressor, a scroll compressor, a reciprocating compressor or other suitable compressors.

It is to be appreciated that other refrigerants may be used to achieve the desired properties as listed herein. It is also to be appreciated that the method described herein may be used to achieve other desired properties in the refrigerant compositions.

The refrigerant compositions may be prepared by any convenient method to combine the desired amounts of the individual components. A preferred method is to weigh the desired component amounts and thereafter combine the components in an appropriate vessel. Agitation may be used, if desired.

A refrigerant container may be any container in which is stored a refrigerant blend composition that has been used in a refrigeration apparatus, air-conditioning apparatus or heat pump apparatus. The refrigerant container may be the refrigeration apparatus, air-conditioning apparatus or heat pump apparatus in which the refrigerant blend was used. Additionally, the refrigerant container may be a storage container for collecting reclaimed refrigerant blend components, including but not limited to pressurized gas cylinders.

Residual refrigerant means any amount of refrigerant blend or refrigerant blend component that may be moved out of the refrigerant container by any method known for transferring refrigerant blends or refrigerant blend components.

Impurities may be removed sufficiently to allow reuse of the refrigerant blend or refrigerant blend component without adversely affecting the performance or equipment within which the refrigerant blend or refrigerant blend component will be used.

The refrigerant compositions herein may have low ozone depletion potential and low global warming potential (GWP). Additionally, the refrigerant compositions may have global warming potentials that are less than many hydrofluorocarbon refrigerants currently in use. One aspect of the embodiments described herein is to reduce the net GWP of refrigerant mixtures by adding fluoroolefins to the refrigerant compositions.

The embodiments disclosed herein provide HVACR system, such as a refrigeration, air-conditioning, or heat pump apparatus, that contains a refrigerant composition as described herein. In some embodiments, the refrigeration or air-conditioning apparatus may be a mobile apparatus. As used herein, mobile refrigeration apparatus or mobile air-conditioning apparatus refers to any refrigeration or air-conditioning apparatus incorporated into a transportation unit for the road, rail, sea, or air. In addition, apparatuses meant to provide refrigeration or air-conditioning for a system independent of any moving carrier, known as "intermodal" systems, may also implement the compositions and methods described herein. Such intermodal systems include "containers" (combined sea/land transport) as well as "swap bodies" (combined road and rail transport). The compositions and methods described herein can be useful for road transport refrigerating or air-conditioning apparatus, such as automobile air-conditioning apparatus or refrigerated road transport equipment.

The refrigerant compositions and method as disclosed herein may also be useful in stationary air-conditioning and heat pumps, e.g. chillers, high temperature heat pumps, residential and light commercial and commercial air-conditioning systems. In stationary refrigeration applications, the refrigerant compositions may be useful in equipment such as domestic refrigerators, ice machines, walk-in and reach-in coolers and freezers, and supermarket systems.

In an embodiment, the compositions and methods described herein can further relate uses as a heat transfer fluid composition. The method comprises transporting the refrigerant composition from a heat source to a heat sink. Heat transfer fluids are utilized to transfer, move or remove heat from one space, location, object or body to a different space, location, object or body by radiation, conduction, or convection. A heat transfer fluid may function as a secondary coolant by providing thermal transfer for cooling (or heating) from a remote refrigeration (or heating) system. In some systems, the heat transfer fluid may remain in a constant state throughout the transfer process (i.e., not evaporate or condense). Alternatively, evaporative cooling processes may utilize heat transfer fluids as well.

A heat source may be defined as any space, location, object or body from which it is desirable to transfer, move or remove heat. Examples of heat sources may be spaces (open or enclosed) requiring refrigeration or cooling, such as refrigerator or freezer cases in a supermarket, building spaces requiring air-conditioning, or the passenger compartment of an automobile requiring air-conditioning. A heat sink may be defined as any space, location, object or body capable of absorbing heat. A vapor compression refrigeration system is one example of such a heat sink.

The compositions and methods can be applied to various equipment and controls of HVAC systems, including for example chillers including the motors and various compressor types thereof, electronics cooling, bearings, air handlers, purges, evaporators and condensers and the fluid management therein. The compositions and methods can be applied to such equipment in the retrofitting and servicing thereof, as well as in the flammability detection and prevention including sensors and methods of ventilation to reduce the probability of flammable mixtures.

### Aspects:

Any of Aspects 1 - 28 can be combined with any of Aspects 29 - 85; and any of Aspects 29 - 56 can be combined with any of Aspects 57 - 85.
Aspect 1. A refrigerant composition for an HVACR system, comprising: R1225ye(E) refrigerant; a second refrigerant that is one of R1234ze(E) refrigerant and R32 refrigerant; a third refrigerant that is one of R227ea refrigerant, R125 refrigerant, and R1234yf refrigerant, wherein the refrigerant composition has a GWP of at or about 2000 or less than 2000, and one of: the second refrigerant is the R1234ze(E) refrigerant and the third refrigerant is the R227ea refrigerant, the second refrigerant is the R32 refrigerant and the third refrigerant is the R125, or the second refrigerant is the R32 refrigerant and the third refrigerant is the R1234yf.
Aspect 2. The refrigerant composition of Aspect 1, wherein the second refrigerant is the R1234ze(E) refrigerant and the third refrigerant is the R227ea refrigerant, and a capacity of the refrigerant composition is at or about 85% or greater than 85% of a capacity of R515B.
Aspect 3. The refrigerant composition of any one of Aspects 1 and 2, wherein the R227ea refrigerant is at or about 41 wt%, or less than 41 wt% and greater than 0 wt% of the refrigerant composition, the refrigerant composition has a capacity that is at or about 85% or greater than 85% of a capacity of R515B, and the GWP of the refrigerant composition is less than 1500.
Aspect 4. The refrigerant composition of any one of Aspects 1-3, wherein the GWP of the refrigerant composition is at or about 150 or less than 150.
Aspect 5. The refrigerant composition of any one of Aspects 1-4, wherein a coefficient of performance of the refrigerant composition is at or about 95% or greater than 95% of a coefficient of performance of R515B.
Aspect 6. The refrigerant composition of any one of Aspects 1-5, wherein the capacity of the refrigerant composition is at or about 90% or greater than 90% of the capacity of R515B.
Aspect 7. The refrigerant composition of any one of Aspects 1 - 6, wherein the refrigerant composition has a capacity that is at or about 95% or greater than 95% of the capacity of R515B.
Aspect 8. The refrigerant composition of Aspect 1, wherein the second refrigerant is the R32 refrigerant and the third refrigerant is the R125 refrigerant, and the refrigerant composition has a capacity that is at or about 80% or greater than 80% of a capacity of R410A.
Aspect 9. The refrigerant composition of any one of Aspects 1 and 8, wherein the R1225ye(E) refrigerant is at or about 42 wt%, or less than 42 wt% and greater than 0% of the refrigerant composition, the R32 refrigerant is at or about 24 wt%, or greater than 24 wt% and less than 100 wt% of the refrigerant composition, and the R125 refrigerant is at or about 58 wt%, or less than 58 wt% and greater than 0 wt% of the refrigerant composition.
Aspect 10. The refrigerant composition of any one of Aspects 1, 8, and 9, wherein the refrigerant composition has a capacity that is at or about 85% or greater than 85% of a capacity of R410A.
Aspect 11. The refrigerant composition of any one of Aspects 1 and 8 - 10, wherein the refrigerant composition has a capacity that is at or about 90% or greater than 90% of a capacity of R410A.
Aspect 12. The refrigerant composition of any one of Aspects 1 and 8 - 11, wherein the refrigerant composition has a capacity that is at or about 95% or greater than 95% of a capacity of R410A.
Aspect 13. The refrigerant composition of any one of Aspects 1 and 8 - 12, wherein the GWP of the refrigerant composition is at or about 1500 or less than 1500.
Aspect 14. The refrigerant composition of any one of Aspects 1 and 8 - 13, wherein the GWP of the refrigerant composition is at or about 1000 or less than 1000.
Aspect 15. The refrigerant composition of any one of Aspects 1 and 8 - 14, wherein the refrigerant composition has a temperature glide of at or about 8°C or less than 8°C.
Aspect 16. The refrigerant composition of any one of Aspects 1 and 8 - 15, wherein the refrigerant composition has a temperature glide of at or about 6°C or less than 6°C.
Aspect 17. The refrigerant composition of Aspect 1, wherein the second refrigerant is the R32 refrigerant and the third refrigerant is the R1234yf refrigerant, and the refrigerant composition has a capacity that is at or about 80% or greater than 80% of a capacity of R407C.
Aspect 18. The refrigerant composition of any one of Aspects 1 and 17, wherein the R1225ye(E) refrigerant is at or about 73 wt%, or less than 73 wt% and greater than 0% of the refrigerant composition, the R32 refrigerant is at or about 14 wt%, or greater than 14 wt% and less than 100 wt% of the refrigerant composition, and the R1234yf refrigerant is at or about 86 wt%, or less than 86 wt% and greater than 0 wt% of the refrigerant composition.
Aspect 19. The refrigerant composition of any one of Aspects 1, 17, and 18, wherein the GWP of the refrigerant composition is at or about 600 or less than 600.
Aspect 20. The refrigerant composition of any one of Aspects 1 and 17 - 19, wherein the GWP of the refrigerant composition is at or about 500 or less than 500.
Aspect 21. The refrigerant composition of any one of Aspects 1 and 17 - 20, wherein the GWP of the refrigerant composition is at or about 300 or less than 300.
Aspect 22. The refrigerant composition of any one of Aspects 1 and 17 - 21, wherein the capacity of the refrigerant composition is at or about 85% or greater than 85% of the capacity of the R407C.
Aspect 23. The refrigerant composition of any one of Aspects 1 and 17 - 22, wherein the capacity of the refrigerant composition is at or about 90% or greater than 90% of the capacity of the R407C.
Aspect 24. The refrigerant composition of any one of Aspects 1 and 17 - 23, wherein the capacity of the refrigerant composition is at or about 95% or greater than 95% of the capacity of the R407C.
Aspect 25. The refrigerant composition of any one of Aspects 1 and 17 - 24, wherein the refrigerant composition has a temperature glide of at or about 10°C or less than 10°C.
Aspect 26. The refrigerant composition of any one of Aspects 1 and 17 - 25, wherein the refrigerant composition has a temperature glide of at or about 8°C or less than 8°C.
Aspect 27. The refrigerant composition of any one of Aspects 1 and 17 - 26, wherein the refrigerant composition has a temperature glide of at or about 6°C or less than 6°C.
Aspect 28. The refrigerant composition of any one of Aspects 1 and 17 - 27, wherein the refrigerant composition has a coefficient of performance of at or about 95% or greater than 95% of a coefficient of performance of the R407C.
Aspect 29. A method of making a refrigerant composition for a HVACR system, the method including: mixing at least an amount of R1225ye refrigerant, an amount of a second refrigerant, and an amount of a third refrigerant to obtain a refrigerant composition, the second refrigerant being one of R1234ze(E) refrigerant and R32 refrigerant, the third refrigerant being one of R227ea refrigerant, R125 refrigerant, and R1234yf refrigerant, and wherein the refrigerant composition has a GWP of at or about 2000 or less than 2000, and one of: the second refrigerant is the R1234ze(E) refrigerant and the third refrigerant is the R227ea refrigerant, the second refrigerant is the R32 refrigerant and the third refrigerant is the R125, or the second refrigerant is the R32 refrigerant and the third refrigerant is the R1234yf.
Aspect 30. The method of Aspect 29, wherein the second refrigerant is the R1234ze(E) refrigerant and the third refrigerant is the R227ea refrigerant, and a capacity of the refrigerant composition is at or about 85% or greater than 85% of a capacity of R515B.
Aspect 31. The method of any one of Aspects 29 and 30, wherein the R227ea refrigerant is at or about 41 wt%, or less than 41 wt% and greater than 0 wt% of the refrigerant composition, the refrigerant composition has a capacity that is at or about 85% or greater than 85% of a capacity of R515B, and the GWP of the refrigerant composition is less than 1500.
Aspect 32. The method of any one of Aspects 29 - 31, wherein the GWP of the refrigerant composition is at or about 150 or less than 150.
Aspect 33. The method of any one of Aspects 29 - 32, wherein a coefficient of performance of the refrigerant composition is at or about 95% or greater than 95% of a coefficient of performance of R515B.
Aspect 34. The method of any one of Aspects 29 - 33, wherein the capacity of the refrigerant composition is at or about 90% or greater than 90% of the capacity of R515B.
Aspect 35. The method of any one of Aspects 29 - 34, wherein the refrigerant composition has a capacity that is at or about 95% or greater than 95% of the capacity of R515B.
Aspect 36. The method of Aspect 29, wherein the second refrigerant is the R32 refrigerant and the third refrigerant is the R125 refrigerant, and the refrigerant composition has a capacity that is at or about 80% or greater than 80% of a capacity of R410A.
Aspect 37. The method of any one of Aspects 29 and 36, wherein the R1225ye(E) refrigerant is at or about 42 wt%, or less than 42 wt% and greater than 0% of the refrigerant composition, the R32 refrigerant is at or about 24 wt%, or greater than 24 wt% and less than 100 wt% of the refrigerant composition, and the R125 refrigerant is at or about 58 wt%, or less than 58 wt% and greater than 0 wt% of the refrigerant composition.
Aspect 38. The method of any one of Aspects 29, 36, and 37, wherein the refrigerant composition has a capacity that is at or about 85% or greater than 85% of a capacity of R410A.
Aspect 39. The method of any one of Aspects 29 and 36 - 38, wherein the refrigerant composition has a capacity that is at or about 90% or greater than 90% of a capacity of R410A.
Aspect 40. The method of any one of Aspects 29 and 36 - 39, wherein the refrigerant composition has a capacity that is at or about 95% or greater than 95% of a capacity of R410A.
Aspect 41. The method of any one of Aspects 29 and 36 - 40, wherein the GWP of the refrigerant composition is at or about 1500 or less than 1500.
Aspect 42. The method of any one of Aspects 29 and 36 - 41, wherein the GWP of the refrigerant composition is at or about 1000 or less than 1000.
Aspect 43. The method of any one of Aspects 29 and 36 - 42, wherein the refrigerant composition has a temperature glide of at or about 8°C or less than 8°C.
Aspect 44. The method of any one of Aspects 29 and 36 - 43, wherein the refrigerant composition has a temperature glide of at or about 6°C or less than 6°C.
Aspect 45. The method of any one of Aspects 29 and 44, wherein the second refrigerant is the R32 refrigerant and the third refrigerant is the R1234yf refrigerant, and the refrigerant composition has a capacity that is at or about 80% or greater than 80% of a capacity of R407C.
Aspect 46. The method of any one of Aspects 29 and 45, wherein the R1225ye(E) refrigerant is at or about 73 wt%, or less than 73 wt% and greater than 0% of the refrigerant composition, the R32 refrigerant is at or about 14 wt%, or greater than 14 wt% and less than 100 wt% of the refrigerant composition, and the R1234yf refrigerant is at or about 86 wt%, or less than 86 wt% and greater than 0 wt% of the refrigerant composition.
Aspect 47. The method of any one of Aspects 29, 45, and 46, wherein the GWP of the refrigerant composition is at or about 600 or less than 600.
Aspect 48. The method of any one of Aspects 29, 45, and 46, wherein the GWP of the refrigerant composition is at or about 500 or less than 500.
Aspect 49. The method of any one of Aspects 29 and 45 - 48, wherein the GWP of the refrigerant composition is at or about 300 or less than 300.
Aspect 50. The method of any one of Aspects 29 and 45 - 49, wherein the capacity of the refrigerant composition is at or about 85% or greater than 85% of the capacity of the R407C.
Aspect 51. The method of any one of Aspects 29 and 45 - 50, wherein the capacity of the refrigerant composition is at or about 90% or greater than 90% of the capacity of the R407C.
Aspect 52. The method of any one of Aspects 29 and 45 - 51, wherein the capacity of the refrigerant composition is at or about 95% or greater than 95% of the capacity of the R407C.
Aspect 53. The method of any one of Aspects 29 and 45 - 52, wherein the refrigerant composition has a temperature glide of at or about 10°C or less than 10°C.
Aspect 54. The method of any one of Aspects 29 and 45 - 53, wherein the refrigerant composition has a temperature glide of at or about 8°C or less than 8°C.
Aspect 55. The method of any one of Aspects 29 and 45 - 54, wherein the refrigerant composition has a temperature glide of at or about 6°C or less than 6°C.
Aspect 56. The method of any one of Aspects 29 and 45 - 55, wherein the refrigerant composition has a coefficient of performance of at or about 95% or greater than 95% of a coefficient of performance of the R407C.
Aspect 57. A method of retrofitting a refrigerant composition in an HVACR system, comprising: adding an amount of at least one refrigerant to a refrigerant composition to produce a retrofit refrigerant composition, the retrofit refrigerant composition including R1225ye(E) refrigerant, a second refrigerant, and a third refrigerant, the second refrigerant being one of R1234ze(E) refrigerant and R32 refrigerant, and the third refrigerant being one of R227ea refrigerant, R125 refrigerant, and R1234yf refrigerant, wherein one of the second refrigerant is the R1234ze(E) refrigerant and the third refrigerant is the R227ea refrigerant, the second refrigerant is the R32 refrigerant and the third refrigerant is the R125, or the second refrigerant is the R32 refrigerant and the third refrigerant is the R1234yf, and the retrofitted refrigerant composition has a GWP that is at or about 2000 or less than 2000.
Aspect 58. The method of Aspect 57, wherein the second refrigerant is the R1234ze(E) refrigerant and the third refrigerant is the R227ea refrigerant, and a capacity of the refrigerant composition is at or about 85% or greater than 85% of a capacity of R515B.
Aspect 59. The method of any one of Aspects 57 and 58, wherein the R227ea refrigerant is at or about 41 wt%, or less than 41 wt% and greater than 0 wt% of the refrigerant composition, the refrigerant composition has a capacity that is at or about 85% or greater than 85% of a capacity of R515B, and the GWP of the refrigerant composition is less than 1500.
Aspect 60. The method of any one of Aspects 57 - 59, wherein the GWP of the refrigerant composition is at or about 150 or less than 150.
Aspect 61. The method of any one of Aspects 57 - 60, wherein a coefficient of performance of the refrigerant composition is at or about 95% or greater than 95% of a coefficient of performance of R515B.
Aspect 62. The method of any one of Aspects 57 - 61, wherein the capacity of the refrigerant composition is at or about 90% or greater than 90% of the capacity of R515B.
Aspect 63. The method of any one of Aspects 57 - 62, wherein the refrigerant composition has a capacity that is at or about 95% or greater than 95% of the capacity of R515B.
Aspect 64. The method of any one of Aspect 57, wherein the second refrigerant is the R32 refrigerant and the third refrigerant is the R125 refrigerant, and the refrigerant composition has a capacity that is at or about 80% or greater than 80% of a capacity of R410A.
Aspect 65. The method of any one of Aspects 57 and 64, wherein the R1225ye refrigerant is at or about 42 wt%, or less than 42 wt% and greater than 0% of the refrigerant composition, the R32 refrigerant is at or about 24 wt%, or greater than 24 wt% and less than 100 wt% of the refrigerant composition, and the R125 refrigerant is at or about 58 wt%, or less than 58 wt% and greater than 0 wt% of the refrigerant composition.
Aspect 66. The method of any one of Aspects 57, 64, and 65, wherein the refrigerant composition has a capacity that is at or about 85% or greater than 85% of a capacity of R410A.
Aspect 67. The method of any one of Aspects 57 and 64 - 66, wherein the refrigerant composition has a capacity that is at or about 90% or greater than 90% of a capacity of R410A.
Aspect 68. The method of any one of Aspects 57 and 64 - 67, wherein the refrigerant composition has a capacity that is at or about 95% or greater than 95% of a capacity of R410A.
Aspect 69. The method of any one of Aspects 57 and 64 - 68, wherein the GWP of the refrigerant composition is at or about 1500 or less than 1500.
Aspect 70. The method of any one of Aspects 57 and 64 - 69, wherein the GWP of the refrigerant composition is at or about 1000 or less than 1000.
Aspect 71. The method of any one of Aspects 57 and 64 - 70, wherein the refrigerant composition has a temperature glide of at or about 8°C or less than 8°C.
Aspect 72. The method of any one of Aspects 57 and 64 - 71, wherein the refrigerant composition has a temperature glide of at or about 6°C or less than 6°C.
Aspect 73. The method of Aspect 57, wherein the second refrigerant is the R32 refrigerant and the third refrigerant is the R1234yf refrigerant, and the refrigerant composition has a capacity that is at or about 80% or greater than 80% of a capacity of R407C.
Aspect 74. The method of any one of Aspects 57 and 73, wherein the R1225ye refrigerant is at or about 73 wt%, or less than 73 wt% and greater than 0% of the refrigerant composition, the R32 refrigerant is at or about 14 wt%, or greater than 14 wt% and less than 100 wt% of the refrigerant composition, and the R1234yf refrigerant is at or about 86 wt%, or less than 86 wt% and greater than 0 wt% of the refrigerant composition.
Aspect 75. The method of any one of Aspects 57, 73, and 74, wherein the GWP of the refrigerant composition is at or about 600 or less than 600.
Aspect 76. The method of any one of Aspects 57 and 73 - 75, wherein the GWP of the refrigerant composition is at or about 500 or less than 500.
Aspect 77. The method of any one of Aspects 57 and 73 - 76, wherein the GWP of the refrigerant composition is at or about 300 or less than 300.
Aspect 78. The method of any one of Aspects 57 and 73 - 77, wherein the capacity of the refrigerant composition is at or about 85% or greater than 85% of the capacity of the R407C.
Aspect 79. The method of any one of Aspects 57 and 73 - 78, wherein the capacity of the refrigerant composition is at or about 90% or greater than 90% of the capacity of the R407C.
Aspect 80. The method of any one of Aspects 57 and 73 - 79, wherein the capacity of the refrigerant composition is at or about 95% or greater than 95% of the capacity of the R407C.
Aspect 81. The method of any one of Aspects 57 and 73 - 80, wherein the refrigerant composition has a temperature glide of at or about 10°C or less than 10°C.
Aspect 82. The method of any one of Aspects 57 and 73 - 81, wherein the refrigerant composition has a temperature glide of at or about 8°C or less than 8°C.
Aspect 83. The method of any one of Aspects 57 and 73 - 82, wherein the refrigerant composition has a temperature glide of at or about 6°C or less than 6°C.
Aspect 84. The method of any one of Aspects 57 and 73 - 83, wherein the refrigerant composition has a coefficient of performance of at or about 95% or greater than 95% of a coefficient of performance of the R407C.
Aspect 85. The method of any one of Aspects 57 - 84, wherein the existing refrigerant composition includes at least one of R1234ze(E) refrigerant, R32 refrigerant, R227ea refrigerant, and R125 refrigerant, and R1234yf refrigerant.

The terminology used herein is intended to describe particular embodiments and is not intended to be limiting. The terms "a," "an," and "the" include the plural forms as well, unless clearly indicated otherwise. The terms "comprises" and/or "comprising," when used in this Specification, specify the presence of the stated features, integers, steps, operations, elements, and/or components, but do not preclude the presence or addition of one or more other features, integers, steps, operations, elements, and/or components. In an embodiment, "connected" and "connecting" as described herein can refer to being "directly connected" and "directly connecting".

With regard to the preceding description, it is to be understood that changes may be made in detail, especially in matters of the construction materials employed and the shape, size, and arrangement of parts without departing from the scope of the present disclosure. It should be appreciated that a range for a component in a composition may be formed by combining an upper limit, a lower limit, and/or an amount described herein for said component. This Specification and the embodiments described are exemplary only, with the true scope and spirit of the disclosure being indicated by the claims that follow.

## Claims

1. A refrigerant composition for an HVACR system, comprising:
R1225ye(E) refrigerant;
a second refrigerant that is one of R1234ze(E) refrigerant and R32 refrigerant;
a third refrigerant that is one of R227ea refrigerant, R125 refrigerant, and R1234yf refrigerant, wherein the refrigerant composition has a GWP of at or about 2000 or less than 2000, and one of:
the second refrigerant is the R1234ze(E) refrigerant and the third refrigerant is the R227ea refrigerant, or
the second refrigerant is the R32 refrigerant and the third refrigerant is the R125, or
the second refrigerant is the R32 refrigerant and the third refrigerant is the R1234yf.

2. The refrigerant composition of claim 1, wherein
the second refrigerant is the R1234ze(E) refrigerant and the third refrigerant is the R227ea refrigerant, and the refrigerant composition has a capacity that is at or about 85% or greater than 85% of a capacity of R515B, or
the second refrigerant is the R32 refrigerant and the third refrigerant is the R125 refrigerant, and the refrigerant composition has a capacity that is at or about 80% or greater than 80% of a capacity of R410A, or
the second refrigerant is the R32 refrigerant and the third refrigerant is the R1234yf refrigerant, and the refrigerant composition has a capacity that is at or about 80% or greater than 80% of a capacity of R407C.

3. The refrigerant composition of claim 1, wherein
the second refrigerant is the R1234ze(E) refrigerant and the third refrigerant is the R227ea refrigerant,
the R227ea refrigerant is at or about 41 wt%, or less than 41 wt% and greater than 0 wt% of the refrigerant composition,
the refrigerant composition has a capacity that is at or about 85% or greater than 85% of a capacity of R515B, and
the GWP of the refrigerant composition is less than 1500.

4. The refrigerant composition of claim 3, wherein the GWP of the refrigerant composition is at or about 150 or less than 150.

5. The refrigerant composition of claim 1, wherein
the second refrigerant is the R32 refrigerant and the third refrigerant is the R125 refrigerant, and
the refrigerant composition has a capacity that is at or about 80% or greater than 80% of a capacity of R410A.

6. The refrigerant composition of claim 5, wherein
the R1225ye refrigerant is at or about 42 wt%, or less than 42 wt% and greater than 0% of the refrigerant composition,
the R32 refrigerant is at or about 24 wt%, or greater than 24 wt% and less than 100 wt% of the refrigerant composition, and
the R125 refrigerant is at or about 58 wt%, or less than 58 wt% and greater than 0 wt% of the refrigerant composition.

7. The refrigerant composition of claim 6, wherein the GWP of the refrigerant composition is at or about 1000 or less than 1000.

8. The refrigerant composition of claim 1, wherein
the second refrigerant is the R32 refrigerant and the third refrigerant is the R1234yf refrigerant, and
the refrigerant composition has a capacity that is at or about 80% or greater than 80% of a capacity of R407C.

9. The refrigerant composition of claim 8, wherein
the R1225ye refrigerant is at or about 73 wt%, or less than 73 wt% and greater than 0% of the refrigerant composition,
the R32 refrigerant is at or about 14 wt%, or greater than 14 wt% and less than 100 wt% of the refrigerant composition, and
the R1234yf refrigerant is at or about 86 wt%, or less than 86 wt% and greater than 0 wt% of the refrigerant composition.

10. The refrigerant composition of claim 9, wherein the GWP of the refrigerant composition is at or about 300 or less than 300.

11. A method of making a refrigerant composition for a HVACR system, the method including:
mixing at least an amount of R1225ye refrigerant, an amount of a second refrigerant, and an amount of a third refrigerant to obtain a refrigerant composition, the second refrigerant being one of R1234ze(E) refrigerant and R32 refrigerant, the third refrigerant being one of R227ea refrigerant, R125 refrigerant, and R1234yf refrigerant, and wherein the refrigerant composition has a GWP of at or about 2000 or less than 2000, and one of:
the second refrigerant is the R1234ze(E) refrigerant and the third refrigerant is the R227ea refrigerant,
the second refrigerant is the R32 refrigerant and the third refrigerant is the R125, or
the second refrigerant is the R32 refrigerant and the third refrigerant is the R1234yf.

12. The method of claim 11, wherein the refrigerant composition is the refrigerant composition of any one of claims 2 - 10.

13. A method of retrofitting a refrigerant composition in an HVACR system, comprising:
adding an amount of at least one refrigerant to a refrigerant composition to produce a retrofit refrigerant composition, the retrofit refrigerant composition including R1225ye(E) refrigerant, a second refrigerant, and a third refrigerant, the second refrigerant being one of R1234ze(E) refrigerant and R32 refrigerant, and the third refrigerant being one of R227ea refrigerant, R125 refrigerant, and R1234yf refrigerant, wherein
one of the second refrigerant is the R1234ze(E) refrigerant and the third refrigerant is the R227ea refrigerant, the second refrigerant is the R32 refrigerant and the third refrigerant is the R125, or the second refrigerant is the R32 refrigerant and the third refrigerant is the R1234yf, and
the retrofit refrigerant composition has a GWP that is at or about 2000 or less than 2000.

14. The method of claim 13, wherein the retrofit refrigerant composition is the refrigerant composition of any one of claims 2 - 10.
